(19) Europäisches Patentamt
European Patent Office
Office européen des brevets

(11) EP 0 791 025 B1

(12) # EUROPÄISCHE PATENTSCHRIFT

(45) Veröffentlichungstag und Bekanntmachung des Hinweises auf die Patenterteilung:
**19.12.2001 Patentblatt 2001/51**

(21) Anmeldenummer: **95936564.4**

(22) Anmeldetag: **28.10.1995**

(51) Int Cl.[7]: **C08G 18/62**, C09D 175/04

(86) Internationale Anmeldenummer:
**PCT/EP95/04234**

(87) Internationale Veröffentlichungsnummer:
**WO 96/14348 (17.05.1996 Gazette 1996/22)**

(54) **WÄSSRIGES ZWEIKOMPONENTEN-POLYURETHAN-BESCHICHTUNGSMITTEL, VERFAHREN ZU SEINER HERSTELLUNG UND SEINE VERWENDUNG IN VERFAHREN ZUR HERSTELLUNG EINER MEHRSCHICHTLACKIERUNG**

AQUEOUS TWO-COMPONENT POLYURETHANE COATING AGENT, METHOD FOR PREPARING IT AND ITS USE IN MULTICOAT PAINTING PROCESSES

AGENT DE REVETEMENT AQUEUX DE POLYURETHANNE A DEUX COMPOSANTS, SON PROCEDE DE FABRICATION ET SON UTILISATION DANS DES PROCEDES D'APPLICATION DE PEINTURE EN PLUSIEURS COUCHES

(84) Benannte Vertragsstaaten:
**AT BE CH DE DK ES FR GB IT LI NL SE**

(30) Priorität: **07.11.1994 DE 4439669**

(43) Veröffentlichungstag der Anmeldung:
**27.08.1997 Patentblatt 1997/35**

(73) Patentinhaber: **BASF Coatings Aktiengesellschaft
48165 Münster (DE)**

(72) Erfinder:
- **BRÜNNEMANN, Michael
48165 Münster (DE)**
- **NIENHAUS, Egbert
D-59387 Ascheberg (DE)**
- **RINK, Heinz-Peter
D-48153 Münster (DE)**
- **MEISENBURG, Uwe
D-47259 Duisburg (DE)**

(74) Vertreter: **Fitzner, Ulrich, Dr. et al
Dres. Fitzner & Münch Rechts- und Patentanwälte Lintorfer Strasse 10
40878 Ratingen (DE)**

(56) Entgegenhaltungen:
**WO-A-94/03516 US-A- 5 279 862**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 791 025 B1

Printed by Jouve, 75001 PARIS (FR)

## Beschreibung

Gegenstand der vorliegenden Erfindung ist ein wäßriges Zweikomponenten-Polyurethan-Beschichtungsmittel, enthaltend

A) ein wasserverdünnbares, Hydroxyl- und Carboxylatgruppen aufweisendes Polyacrylatharz (A) mit einer OH-Zahl von 40 bis 200 mg KOH/g, vorzugsweise 60 bis 140 mg KOH/g, einer Säurezahl von 20 bis 100 mgKOH/g, vorzugsweise 25 bis 50 mgKOH/g, und

B) eine Polyisocyanatkomponente (B) als Vernetzungsmittel.

wobei die Polyisocyanatkomponente (B) in solch einer Menge eingesetzt wird, daß das Gewichtsverhältnis zwischen Polyacrylatharzfeststoff und Polyisocyanatfeststoff 60:40 bis 90:10 beträgt,
Gegenstand der vorliegenden Erfindung ist außerdem ein Verfahren zur Herstellung dieser wäßrigen Beschichtungsmittel sowie ihre Verwendung in Verfahren zur Herstellung einer Mehrschichtlackierung sowie beschichtete Gegenstände, bei denen mindestens eine Lackschicht unter Verwendung dieser Beschichtungsmittel hergestellt wurde.

Die Lackindustrie ist aus ökologischen und ökonomischen Gründen bestrebt, einen möglichst großen Teil der in Lacken eingesetzten organischen Lösemittel durch Wasser zu ersetzen. Insbesondere bei der Automobillackierung besteht ein großer Bedarf an wäßrigen Lacken. Dies gilt sowohl für den Bereich der Automobilserienlackierung als auch für den Bereich der Autoreparaturlackierung. Wäßrige Beschichtungsmittel kommen dabei insbesondere im Bereich der Decklacke zum Einsatz. Unter Decklacken werden hierbei Lacke verstanden, die zur Herstellung der obersten Lackschicht verwendet werden. Die oberste Lackschicht kann dabei einschichtig oder mehrschichtig, insbesondere zweischichtig sein. Zweischichtige Decklackierungen bestehen aus einer pigmentierten Basislackschicht und einer auf der Basislackschicht aufgebrachten unpigmentierten oder nur mit transparenten Pigmenten pigmentierten Klarlackschicht.

Zweischichtlackierungen werden heute nach dem Naß-in-Naß-Verfahren hergestellt, bei dem ein pigmentierter Basislack vorlackiert wird und die so erhaltene Basislackschicht ohne Einbrennschritt mit einem Klarlack überlackiert und anschließend Basislackschicht und Klarlackschicht zusammen gehärtet werden. Dieses Verfahren ist ökonomisch sehr vorteilhaft, stellt aber hohe Anforderungen an den Basislack und den Klarlack. Der auf den noch nicht gehärteten Basislack applizierte Klarlack darf die Basislackschicht nicht anlösen oder sonst wie stören, weil sonst Lackierungen mit schlechtem Aussehen erhalten werden. Dies gilt insbesondere für Lackierungen, bei denen Basislacke, die Effektpigmente (z.B. Metallpigmente, insbesondere Aluminiumflakes oder Perlglanzpigmente) enthalten, eingesetzt werden. Ferner müssen die Deckbeschichtungszusammensetzungen mit Hilfe von automatischen Lackieranlagen durch Spritzen applizierbar sein. Dazu müssen sie bei Spritzviskosität einen so hohen Feststoffgehalt aufweisen, daß mit 1 bis 2 Spritzgängen (Kreuzgängen) Lackfilme mit ausreichender Schichtdicke erhalten werden, und sie müssen eingebrannte Lackfilme liefern, die ein gutes Aussehen (guter Verlauf, hoher Glanz, guter Decklackstand und hohe Härte) sowie eine gute Witterungsbeständigkeit zeigen.

Im Bereich der Autoreparaturlackierung besteht außerdem noch die Forderung, daß die eingesetzten Beschichtungsmittel bei niedrigen Temperaturen (im allgemeinen < 80°C) aushärtbar sind und auch bei Aushärtung bei diesen niedrigen Temperaturen zu Filmen mit den geforderten guten mechanischen Eigenschaften führen.

Aus der EP-B-358 979 sind wäßrige Zweikomponenten-Polyurethanbeschichtungsmittel bekannt, die ein hydroxylgruppenhaltiges Polyacrylatharz sowie eine Polyisocyanatkomponente enthalten. Diese Beschichtungsmittel sind jedoch bei Verwendung als transparenter Decklack über einer Basislackschicht beispielsweise bezüglich der Haftung auf der Basislackschicht verbesserungsbedürftig. Probleme bestehen auch bezüglich anderer mechanischer Eigenschaften der resultierenden Beschichtungen, wie z.B. bezüglich der Witterungsbeständigkeit der resultierenden Beschichtungen.

Außerdem sind aus der nicht vorveröffentlichten Deutschen Patentanmeldung P 43 22 242.0 wäßrige Zweikomponenten-Polyurethanbeschichtungsmittel bekannt, die ein hydroxylgruppenhaltiges Polyacrylatharz sowie eine Polyisocyanatkomponente enthalten. Hydroxylgruppenhaltige Polyacrylatharze auf der Basis spezieller cycloaliphatischer (Meth)acrylsäureester sind allerdings in dieser Schrift nicht beschrieben.

Ferner sind beispielsweise auch aus der JP-OS 4-1254 Beschichtungsmittel auf der Basis von hydroxylgruppenhaltigen Polyacrylatharzen und Vernetzungsmitteln bekannt. Die als Bindemittel eingesetzten hydroxylgruppenhaltigen Polyacrylatharze sind dabei erhältlich aus hydroxylgruppenhaltigen Monomeren, Alkylacrylaten, Alkylmethacrylaten, ggf. Styrol sowie ggf. ethylenisch ungesättigten Polymeren. Dabei ist es erfindungswesentlich, daß das Polyacrylatharz unter Verwendung von 4-t-Butylcyclohexyl-acrylat und/oder 4-t-Butylcyclohexylmethacrylat als Monomerkomponente hergestellt worden ist.

Diese aus der JP-OS 4-1254 bekannten Beschichtungsmittel weisen insbesondere bei Verwendung als transparenter Decklack über einer Basislackschicht vor allem den Nachteil einer unzureichenden Topfzeit der Beschichtungsmittel auf. Schließlich ist auch der hohe Anteil an organischen Lösemitteln von Nachteil.

Der vorliegenden Erfindung lag somit die Aufgabe zugrunde, Beschichtungsmittel zur Verfügung zu stellen, die bei Verwendung als Klarlack über einer Basislackschicht die darunterliegende Basislackschicht nur möglichst wenig anlösen sowie einen guten Hell-/Dunkeleffekt bei der Aufsicht unter verschiedenen Winkeln zeigen. Gleichzeitig sollten dabei die resultierenden Beschichtungen eine gute Chemikalienbeständigkeit sowie eine gute Witterungsbeständigkeit aufweisen. Weiterhin sollten die Beschichtungsmittel einen sehr guten Verlauf zeigen und unter den Bedingungen der Autoreparaturlackierung bei einem möglichst niedrigen Anteil an organischen Lösemitteln ein gutes Applikationsverhalten zeigen. Ferner sollten die Beschichtungsmittel für die Autoreparaturlackierung geeignet sein, d.h. sie sollten bei niedrigen Temperaturen von im allgemeinen unter 120°C, bevorzugt unter 80°C, aushärtbar sein. Außerdem sollten die Beschichtungsmittel auch bei diesen niedrigen Temperaturen schnell aushärten (schnelle Staub- und Klebfreiheit sowie schnelle Durchtrocknung), dabei aber eine möglichst lange Verarbeitbarkeit (Topfzeit) aufweisen. Schließlich sollten die Beschichtungsmittel einen guten Decklackstand aufweisen und bei Verwendung als transparenter Decklack über einer pigmentierten Basislackschicht zu Beschichtungen mit einer verbesserten Haftung zum Klarlack führen.

Überraschenderweise wird diese Aufgabe durch ein Beschichtungsmittel der eingangs genannten Art gelöst, das dadurch gekennzeichnet ist, daß die Komponente (A) ein hydroxylgruppenhaltiges Polyacrylatharz ist, das erhältlich ist, indem in einem organischen Lösemittel oder Lösemittelgemisch und in Gegenwart mindestens eines Polymerisationsinitiators

(a1) ein von (a2), (a3), (a4) und (a6) verschiedener, mit (a2), (a3), (a4), (a5) und (a6) copolymerisierbarer, im wesentlichen carboxylgruppenfreier Ester aus (Meth)acrylsäure und einem cycloaliphatischen C6 bis C10 Alkohol, ausgenommen Cyclohexylmethacrylat, oder ein Gemisch aus solchen Monomeren,

(a2) ein von (a1), (a3), (a4) und (a6) verschiedener, mit (a1), (a3), (a4), (a5) und (a6) copolymerisierbarer, im wesentlichen carboxylgruppenfreier (Meth)acrylsäureester oder ein Gemisch aus solchen Monomeren,

(a3) ein mit (a1), (a2), (a4), (a5) und (a6) copolymerisierbares ethylenisch ungesättigtes Monomer, das mindestens eine Hydroxylgruppe pro Molekül trägt und im wesentlichen carboxylgruppenfrei ist, oder ein Gemisch aus solchen Monomeren,

(a4) ggf. ein oder mehrere Vinylester von in α-Stellung verzweigten Monocarbonsäuren mit 5 bis 18 C-Atomen je Molekül und/oder mindestens ein Umsetzungsprodukt aus Acrylsäure und/oder Methacrylsäure mit dem Glycidylester einer in α-Stellung verzweigten Monocarbonsäure mit 5 bis 18 C-Atomen je Molekül oder anstelle des Umsetzungsproduktes eine äquivalente Menge Acryl- und/oder Methacrylsäure, die dann während oder nach der Polymerisationsreaktion mit dem Glycidylester einer in α-Stellung verzweigten Monocarbonsäure mit 5 bis 18 C-Atomen je Molekül umgesetzt wird,

(a5) ein mindestens eine Carboxylgruppe pro Molekül tragendes, mit (a1), (a2), (a3), (a4) und (a6) copolymerisierbares, ethylenisch ungesättigtes Monomer oder ein Gemisch aus solchen Monomeren und

(a6) ggf. ein mit (a1), (a2), (a3), (a4) und (a5) copolymerisierbares, von (a1), (a2), (a3) und (a4) verschiedenes, im wesentlichen carboxylgruppenfreies, ethylenisch ungesättigtes Monomer oder ein Gemisch aus solchen Monomeren

polymerisiert werden und nach Beendigung der Polymerisation das erhaltene Polyacrylatharz ggf. zumindest teilweise neutralisiert und in Wasser dispergiert wird, wobei (a1), (a2), (a3), (a4), (a5) und (a6) in Art und Menge so ausgewählt werden, daß das Polyacrylatharz (A) die gewünschte OH-Zahl und Säurezahl aufweist,
wobei die Formulierung "im wesentlichen carboxylgruppenfrei definiert, daß die Komponenten (a1), (a2), (a3), (a4) und (a6) einen so geringen Carboxylgruppengehalt aufweisen, daß ein aus diesen Komponenten hergestelltes Polyacrylatharz eine Säurezahl von höchstens 10 mg KOH/g hat.

Gegenstand der vorliegenden Erfindung ist außerdem ein Verfahren zur Herstellung eines mehrschichtigen Überzuges auf einer Substratoberfläche unter Verwendung dieser Beschichtungsmittel sowie die Verwendung der Beschichtungsmittel im Bereich der Autoreparaturlackierung.

Es ist überraschend und war nicht vorhersehbar, daß die erfindungsgenäßen Beschichtungsmittel bei Verwendung als transparenter Decklack über einer pigmentierten Basislackschicht den Vorteil aufweisen, daß sie die Basislackschicht nur wenig anlösen und den Metalleffekt nur sehr gering beeinflußen und dabei gleichzeitig eine gute Chemikalienbeständigkeit sowie Witterungsbeständigkeit aufweisen. Weiterhin weisen die erfindungsgemäßen Beschichtungsmittel den Vorteil eines guten Decklackstandes auf und zeigen unter den Bedingungen der Autoreparaturlackierung einen sehr guten Verlauf und ein gutes Applikationsverhalten. Vorteilhaft ist ferner, daß die Beschichtungsmittel bei niedrigen Temperaturen aushärtbar sind und so für den Bereich der Autoreparaturlackierung einsetzbar sind. Selbst bei Härtung der Beschichtungsmittel bei diesen niedrigen Temperaturen härten die Beschichtungsmittel schnell aus, weisen dabei aber gleichzeitig eine lange Verarbeitbarkeit auf. Schließlich weisen die erfindungsgemäßen Beschichtungsmittel bei Verwendung als Klarlack über einer Basislackschicht eine deutlich verbesserte Haftung zur Basislackschicht auf.

Im folgenden werden nun die einzelnen Bestandteile des erfindungsgemäßen Beschichtungsmittels näher erläutert.

Bevor die Herstellung der erfindungsgemäß einzusetzenden Polyacrylatharze näher beschrieben wird, werden zwei Begriffserklärungen vorausgeschickt:

1. Als Abkürzung für "Methacrylsäure oder Acrylsäure" wird gelegentlich (Meth)acrylsäure verwendet.

2. Die Formulierung "im wesentlichen carboxylgruppenfrei" soll ausdrücken, daß die Komponenten (a1), (a2), (a3), (a4) und (a6) einen geringen Carboxylgruppengehalt (höchstens aber soviel, daß ein aus diesen Komponenten hergestellten Polyacrylatharz eine Säurezahl von höchstens 10 mg KOH/g hat) aufweisen können. Es ist aber bevorzugt, daß der Carboxylgruppengehalt der Komponenten (a1), (a2), (a3), (a4) und (a6) so niedrig wie möglich gehalten wird. Besonders bevorzugt werden carboxylgruppenfreie (a1), (a2), (a3), (a4) und (a6) Komponenten eingesetzt.

Zur Herstellung der erfindungsgemäß einzusetzenden Polyacrylatharze wird als Komponente (a1) ein mit (a2), (a3), (a4), (a5) und (a6) copolymerisierbarer, von (a2), (a3), (a4) und (a6) verschiedener, im wesentlichen carboxylgruppenfreier Ester aus (Meth)acrylsäure und einem cycloaliphatischen Alkohol, der 6 bis 10 C-Atome aufweist, ausgenommen Cyclohexylmethacrylat, oder ein Gemisch aus solchen Monomeren eingesetzt.

Beispiele für als Komponente (a1) geeignete cycloaliphatische Ester der Acrylsäure und/oder Methacrylsäure sind Cyclohexylacrylat, 4-tert.-Butylcyclohexylacrylat, 4-tert.-Butylcyclohexylmethacrylat, Isobornylacrylat und Isobornylmethacrylat. Bevorzugt wird als Komponente (a1) 4-tert.-Butylcyclohexylacrylat und/oder 4-tert.-Butylcyclohexylmethacrylat eingesetzt.

Als Komponente (a2) kann jeder mit (a1), (a3), (a4), (a5) und (a6) copolymerisierbare, von (a1), (a3), (a4) und (a6) verschiedene, im wesentlichen carboxylgruppenfreie Ester der (Meth)acrylsäure oder ein Gemisch aus solchen (Meth)acrylsäureestern eingesetzt werden. Als Beispiele werden Alkylacrylate und Alkylmethacrylate mit bis zu 20 Kohlenstoffatomen im Alkylrest, wie z.B. Methyl-, Ethyl-, Propyl-, Isopropyl-, Butyl-, Isobutyl-, Pentyl-, Isoamyl-, Hexyl-, Ethylhexyl-, Furfuryl-, Octyl-, 3,5,5-Trimethylhexyl-, Decyl-, Hexadecyl-, Octadecyl-, Stearyl- und Laurylacrylat und -methacrylat genannt. Bevorzugt werden Gemische aus Alkylacrylaten und/oder Alkylmethacrylaten als (a2)-Komponente eingesetzt, die zu mindestens 20 Gew.-% aus n-Butyl- und/oder t-Butylacrylat und/oder n-Butyl- und/oder t-Butylmethacrylat bestehen.

Als Komponente (a2) können auch Ethyltriglykol(meth)acrylat und Methoxyoligoglykol(meth)acrylat mit einem zahlenmittleren Molekulargewicht von vorzugsweise 550 oder andere ethoxylierte und/oder propoxylierte hydroxylgruppenfreie (Meth)acrylsäurederivate eingesetzt werden.

Als Komponente (a3) können mit (a1), (a2), (a4), (a5) und (a6) copolymerisierbare ethylenisch ungesättigte Monomere, die mindestens eine Hydroxylgruppe pro Molekül tragen und im wesentlichen carboxylgruppenfrei sind oder ein Gemisch aus solchen Monomeren eingesetzt werden. Als Beispiele werden Hydroxyalkylester der Acrylsäure, Methacrylsäure oder einer anderen $\alpha,\beta$-ethylenisch ungesättigten Carbonsäure genannt. Diese Ester können sich von einem Alkylenglykol ableiten, das mit der Säure verestert ist, oder sie können durch Umsetzung der Säure mit einem Alkylenoxid erhalten werden.

Ist eine hohe Reaktivität des Acrylatcopolymerisats erwünscht, können ausschließlich Hydroxyalkylester mit primären Hydroxylgruppen eingesetzt werden; soll das Polyacrylat weniger reaktiv sein, können ausschließlich Hydroxyalkylester mit sekundären Hydroxylgruppen eingesetzt werden. Selbstverständlich können auch Mischungen von Hydroxyalkylestern mit primären Hxydroxylgruppen und Hydroxyalkylestern mit sekundären Hydroxylgruppen verwendet werden. Beispiele für geeignete Hydroxyalkylester $\alpha,\beta$-ungesättigter Carbonsäuren mit primären Hydroxylgruppen sind Hydroxyethylacrylat, 3-Hydroxypropylacrylat, Hydroxybutylacrylat, Hydroxyamylacrylat, Hydroxyhexylacrylat, Hydroxyoctylacrylat und die entsprechenden Methacrylate sowie die entsprechenden Hydroxyester anderer $\alpha,\beta$-ungesättigter Carbonsäuren. Als Beipiele für verwendbare Hydroxyalkylester mit einer sekundären Hydroxylgruppe seien 2-Hydroxypropylacrylat, 2-Hydroxybutylacrylat, 3-Hydroxybutylacrylat und die entsprechenden Methacrylate genannt. Selbstverständlich könnn jeweils auch die entsprechenden Ester anderer $\alpha,\beta$-ungesättigter Carbonsäuren, wie z.B. der Crotonsäure und der Isocrotonsäure eingesetzt werden.

Ggf. kann als Komponente (a3) zumindest teilweise Trimethylolpropanmonoallylether eingesetzt wird. Der Anteil an Trimethylolpropanmonoallylether beträgt üblicherweise 2 bis 10 Gew.-%, bezogen auf das Gesamtgewicht der zur Herstellung des Polyacrylatharzes eingesetzten Monomeren (a1) bis (a6). Daneben ist es aber auch möglich,

2 bis 10 Gew.-%, bezogen auf das Gesamtgewicht der zur Herstellung des Polyacrylatharzes eingesetzten Monomeren, Trimethylolpropanmonoallylether zum fertigen Polyacrylatharz zuzusetzen. Die olefinisch ungesättigten Polyole, wie insbesondere Trimethylolpropanmonoallylether, können als alleinige hydroxylgruppenhaltige Monomere (a3), insbesondere aber anteilsmäßig in Kombination mit anderen der genannten hydroxylgruppenhaltigen Monomeren, eingesetzt werden.

Es ist bevorzugt, daß als Komponente (a3) zumindest teilweise nur Monomere oder Mischungen von Monomeren eingesetzt werden (im folgenden Komponente (a31) genannt), die bei alleiniger Polymerisation des jeweiligen Monomers ein Polyacrylat- und/oder Polymethacrylatharz mit einer Glasübergangstemperatur von -20°C bis +6°C, oder von +50°C bis 80°C ergeben. Dies bedeutet, daß bei Verwendung von Mischungen verschiedener Monomerer als Komponente (a31) selbstverständlich auch solche Mischungen geeignet sind, die bei alleiniger Polymerisation der Komponente (a31) ein Polyacrylat- und/oder Polymethacrylatharz mit einem $T_g$-Wert außerhalb dieser für die einzelnen Monomeren angegebenen Bereiche ergeben.

Die Glasübergangstemperatur kann vom Fachmann unter Zuhilfenahme der Formel

$$\frac{1}{T_G} \sum_{n=1}^{n=x} \frac{W_n}{T_{Gn}}$$

| | |
|---|---|
| TG = | Glasübergangstemperatur des Polymeren |
| x = | Anzahl der verschiedenen einpolymerisierten Monomere, |
| $W_n$ = | Gewichtsanteil des n-ten Monomers |
| $T_{Gn}$ = | Glasübergangstemperatur des Homopolymers aus dem n-ten Monomer |

näherungsweise berechnet werden.

Bevorzugt ist die Komponente (a31) ausgewählt aus Hydroxyethylmethacrylat, Hydroxyethylacrylat, 3-Hydroxypropylmethacrylat, 3-Hydroxypropylacrylat, 2-Hydroxypropylmethacralat und/oder 2-Hydroxypropylacrylat.

Ganz besonders bevorzugt wird als Komponente (a31) 3-Hydroxypropylmethacrylat und/oder 3-Hydroxypropylacrylat und/oder 2-Hydroxypropylmethacrylat und/oder 2-Hydroxypropylacrylat oder eine Mischung aus 1.) Hydroxyethylacrylat und/oder Hydroxyethylmethacrylat und 2.) 3-Hydroxypropyl-acrylat und/oder -methacrylat und/oder 2-Hydroxypropyl-acrylat und/oder -methacrylat eingesetzt.

Insbesondere werden als Komponente (a3) Mischungen aus der Komponente (a31) und den bereits obenbeschriebenen, von der Komponente (a31) verschiedenen, weiteren hydroxylgruppenhaltigen Monomeren (a32) eingesetzt.

Als Komponente (a4) werden ggf. ein oder mehrere Vinylester von in α-Stellung verzweigten Monocarbonsäuren mit 5 bis 18 C-Atomen im Molekül eingesetzt. Die verzweigten Monocarbonsäuren können erhalten werden durch Umsetzung von Ameisensäure oder Kohlenmonoxid und Wasser mit Olefinen in Anwesenheit eines flüssigen, stark sauren Katalysators; die Olefine können Crack-Produkte von paraffinischen Kohlenwasserstoffen, wie Mineralölfraktionen, sein und können sowohl verzweigte wie geradkettige acyclische und/oder cycloaliphatische Olefine enthalten. Bei der Umsetzung solcher Olefine mit Ameisensäure bzw. mit Kohlenmonoxid und Wasser entsteht ein Gemisch aus Carbonsäuren, bei denen die Carboxylgruppen vorwiegend an einem quaternären Kohlenstoffatom sitzen. Andere olefinische Ausgangsstoffe sind z.B. Propylentrimer, Propylentetramer und Diisobutylen. Die Vinylester können aber auch auf an sich bekannte Weise aus den Säuren hergestellt werden, z.B. indem man die Säure mit Acetylen reagieren läßt.

Besonders bevorzugt werden - wegen der guten Verfügbarkeit- Vinylester von gesättigten aliphatischen Monocarbonsäuren mit 9 bis 11 C-Atomen, die am α-C-Atom verzweigt sind, eingesetzt.

Als Komponente (a4) wird ggf. zusammen mit dem Vinylester oder anstelle des Vinylesters das Umsetzungsprodukt aus Acrylsäure und/oder Methacrylsäure mit dem Glycidylester einer in α-Stellung verzweigten Monocarbonsäure mit 5 bis 18 C-Atomen je Molekül eingesetzt. Glycidylester stark verzweigter Monocarbonsäuren sind unter dem Handelsnamen "Cardura" erhältlich. Die Umsetzung der Acryl- oder Methacrylsäure mit dem Glycidylester einer Carbonsäure mit einem tertiären α-Kohlenstoffatom kann vorher, während oder nach der Polymerisationsreaktion erfolgen. Bevorzugt wird als Komponente (a4) das Umsetzungsprodukt von Acryl- und der Methacrylsäure mit dem Glycidylester der Versaticsäure eingesetzt. Dieser Glycidylester ist unter dem Namen "Cardura E10" im Handel erhältlich.

Als Komponente (a5) kann jedes mindestens eine Carboxylgruppe pro Molekül tragende, mit (a1), (a2), (a3), (a4) und (a6) copolymerisierbare, ethylenisch ungesättigte Monomer oder ein Gemisch aus solchen Monomeren eingesetzt werden. Als Komponente (a5) werden vorzugsweise Acrylsäure und/oder Methacrylsäure eingesetzt. Es können aber auch andere ethylenisch ungesättigte Säuren mit bis zu 6 C-Atomen im Molekül eingesetzt werden. Als Beispiele für solche Säuren werden Ethacrylsäure, Crotonsäure, Maleinsäure, Fumarsäure und Itaconsäure genannt. Als Komponente (a5) können auch Maleinsäuremono(meth)acryloyloxyethylester, Bernsteinsäuremono(meth)acryloyloxyethylester und Phthalsäuremono(meth)acryloyloxyethylester eingesetzt werden.

Als Komponente (a6) können alle mit (a1), (a2), (a3), (a4) und (a5) copolymerisierbaren, von (a1), (a2), (a3) und (a4) verschiedenen, im wesentlichen carboxylgruppenfreien ethylenisch ungesättigten Monomere oder Gemische aus solchen Monomeren eingesetzt werden. Als Komponente (a6) werden vorzugsweise vinylaromatische Kohlenwasserstoffe, wie Styrol, α-Alkylstyrol und Vinyltoluol, eingesetzt.

Als Komponente (a6) können in Kombination mit anderen als Komponente (a6) geeignet genannten Monomeren auch Polysiloxanmakromonomere eingesetzt werden. Geeignet sind Polysiloxanmakromonomere, die ein zahlenmittleres Molekulargewicht von 1.000 bis 40.000, bevorzugt von 2.000 bis 10.000, und im Mittel 0,5 bis 2,5, bevorzugt 0,5 bis 1,5, ethylenisch ungesättigte Doppelbindungen pro Molekül aufweisen. Geeignet sind beispielsweise die in der DE-OS 38 07 571 auf den Seiten 5 bis 7, die in der DE-OS 37 06 095 in den Spalten 3 bis 7, die in der EP-B 358 153 auf den Seiten 3 bis 6 und die in der US-PS 4,754,014 in den Spalten 5 bis 9 beschriebenen Polysiloxanmakromonomere. Ferner sind auch andere Acryloxisilan-enthaltende Vinylmonomere mit den obengenannten Molekulargewichten und Gehalten an ethylenisch ungesättigten Doppelbindungen geeignet, beispielsweise Verbindungen, die herstellbar sind durch Umsetzung hydroxyfunktioneller Silane mit Epichlorhydrin und anschließender Umsetzung des Reaktionsproduktes mit Methacrylsäure und/oder Hydroxyalkylestern der (Meth)acrylsäure.

Bevorzugt werden als Komponente (a6) Polysiloxanmakromonomere der folgenden Formel eingesetzt:

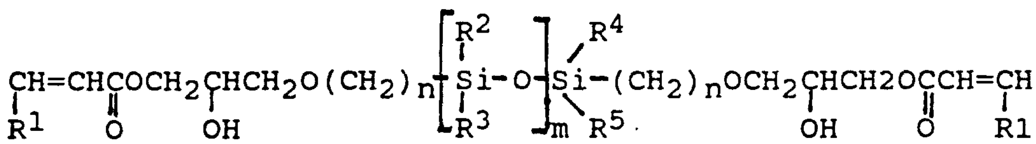

mit $R^1$ = H oder $CH_3$

$R^2$, $R^3$, $R^4$, $R^5$ = gleiche oder verschiedene aliphatische Kohlenwasserstoffreste mit 1 bis 8 C-Atomen, insbesondere Methyl, oder Phenylrest.

n = 2 bis 5, bevorzugt 3

m = 8 bis 50

Besonders bevorzugt wird das ω,ω'-acryloxyorganofunktionelle Polydimethylsiloxan der Formel

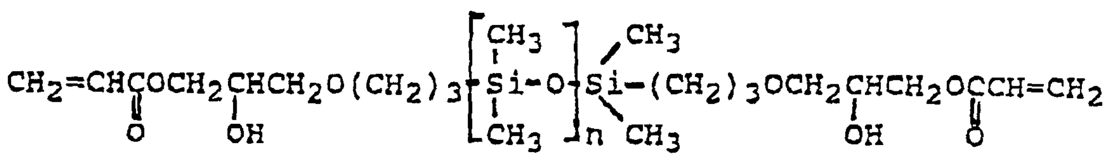

mit n ≃ 30 bis 50 eingesetzt.

Bevorzugt werden als Komponente (a6) auch Polysiloxanmakromonomere eingesetzt, die hergestellt worden sind durch Umsetzung von 70 bis 99,999 Mol-% einer Verbindung (1), dargestellt durch die Formel (I)

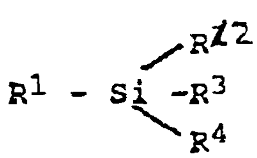 (I)

in welcher $R^1$ eine aliphatische Kohlenwasserstoffgruppe mit 1 bis 8 C-Atomen oder einen Phenylrest darstellt und $R^2$, $R^3$ und $R^4$ jeweils für einen Halogenrest oder einen Alkoxyrest mit 1 bis 4 C-Atomen oder eine Hydroxylgruppe

stehen, mit 30 bis 0,001 Mol-% einer Verbindung (2), dargestellt durch die Formel (II)

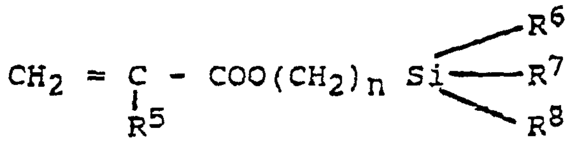

(II)

in welcher $R^5$ ein Wasserstoffatom oder einen Methylrest darstellt, $R^6$, $R^7$ und $R^8$ jeweils für Halogen, OH- oder einen Alkoxyrest mit 1 bis 4 C-Atomen oder eine aliphatische Kohlenwasserstoffgruppe mit 1 bis 8 C-Atomen stehen, wobei wenigstens einer der Reste $R^6$, $R^7$ oder $R^8$ OH- oder eine Alkoxygruppe ist und n eine ganze Zahl von 1 bis 6 darstellt.

Beispiele für geeignete Verbindungen (1) und (2) sind in der WO 92/22615 auf Seite 13, Zeile 18 bis Seite 15, Zeile 9, genannt.

Die Reaktion zwischen den Verbindungen (1) und (2) wird bewerkstelligt durch die dehydratisierende Kondensation der Hydroxylgruppen, die in diesen Verbindungen enthalten sind und/oder der Hydroxylgruppen, die auf die Hydrolyse der Alkoxygruppen dieser Verbindungen zurückzuführen sind. In Abhängigkeit von den Reaktionsbedingungen beinhaltet die Umsetzung zusätzlich zu den Dehydratisierungsreaktion eine dealkohalisierende Kondensation. Falls die Verbindungen (1) oder (2) Halogenreste enthalten, wird die Reaktion zwischen (1) und (2) bewerkstelligt durch Dehydrohalogenierung.

Die Bedingungen, unter denen die Reaktion zwischen der Verbindung (1) und der Verbindung (2) durchgeführt wird, sind ebenfalls in der internationalen Patentanmeldung mit der internationalen Veröffentlichungsnummer WO 92/22615 auf der Seite 15, Zeile 23, bis Seite 18, Zeile 10, beschrieben.

Die Einsatzmenge des oder der Polysiloxanmakromonomeren (a6) zur Modifizierung der Acrylatcopolymerisate (A) beträgt weniger als 5 Gew.-%, bevorzugt weniger als 3 Gew.-%, besonders bevorzugt 0,05 bis 2,5 Gew.-%, und ganz besonders bevorzugt 0,05 bis 0,8 Gew.-%, jeweils bezogen auf das Gesamtgewicht der zur Herstellung des Copolymerisats (A) eingesetzten Monomeren.

Die Verwendung derartiger Polysiloxanmakromonomerer führt zu einer Verbesserung des Slips des wäßrigen Polyurethanbeschichtungsmittels.

Die Art und Menge der Komponenten (a1) bis (a6) wird so ausgewählt, daß das Polyacrylatharz (A) die gewünschte OH-Zahl und Säurezahl aufweist. Besonders bevorzugt eingesetzte Acrylatharze werden erhalten durch Polymerisation von

(a1) 5 bis 80 Gew.-%, bevorzugt 5 bis 30 Gew.-%, der Komponente (a1),
(a2) 5 bis 80 Gew.-%, bevorzugt 5 bis 30 Gew.-%, der Komponente (a2),
(a3) 10 bis 60 Gew.-%, bevorzugt 10 bis 40 Gew.-%, der Komponente (a3),
(a4) 0 bis 20 Gew.-%, bevorzugt 0 bis 15 Gew.-%, der Komponente (a4),
(a5) 1 bis 15 Gew.-%, bevorzugt 2 bis 8 Gew.-%, der Komponente (a5) und
(a6) 0 bis 40 Gew.-%, bevorzugt 0 bis 30 Gew.-%, der Komponente (a6),

wobei die Summe der Gewichtsanteile der Komponenten (a1) bis (a6) jeweils 100 Gew.-% beträgt.

Besonders bevorzugt wird das Acrylatharz erhalten durch Polymerisation unter Verwendung von

(a31) 5 bis 60 Gew.-%, bevorzugt 5 bis 40 Gew.-%, besonders bevorzugt 10 bis 40 Gew.-%, der Komponente (a31) und

(a32) 0 bis 55 Gew.-%, bevorzugt 5 bis 20 Gew.-%, der Komponente (a32),

wobei die Gewichtsprozentangaben auf das Gesamtgewicht der Anteile der Komponenten (a1) bis (a6) bezogen sind.

Die Herstellung der erfindungsgemäß eingesetzten Polyacrylatharze (A) erfolgt in einem organischen Lösemittel oder Lösemittelgemisch und in Gegenwart mindestens eines Polymerisationsinitiators. Als organische Lösemittel und Polymerisationsinitiatoren werden die für die Herstellung von Polyacrylatharzen üblichen und für die Herstellung von wäßrigen Dispersionen geeigneten Lösemittel und Polymerisationsinitiatoren eingesetzt.

Als Beispiele für brauchbare Lösemittel werden Butylglykol, 2-Methoxypropanol, n-Butanol, Methoxybutanol, n-Propanol, Ethylenglykolmonomethylether, Ethylenglykolmonoethylether, Ethylenglykolmonobutylether, Diethylenglykolmonomethylether, Diethylenglykolmonoethylether, Diethylenglykoldiethylether, Diethylenglykolmonobutylether, 2-Hydroxypropionsäureethylester und 3-Methyl-3-methoxybutanol sowie Derivate auf Basis von Propylenglykol, z.B. Ethylethoxypropionat, Methoxypropylacetat und ähnliche, genannt.

Als Beispiele für brauchbare Polymerisationsinitiatoren werden freie Radikale bildende Initiatoren, wie z.B. t-Butylperethylhexanoat, Benzoylperoxid, Azobisisobutyronitril und t-Butylperbenzoat genannt. Die Polymerisation wird zweckmäßigerweise bei einer Temperatur von 80 bis 180°C, vorzugsweise 110 bis 140°C, durchgeführt. Bevorzugt werden als Lösemittel Ethoxyethylpropionat und Butylacetat eingesetzt.
Bevorzugt wird das Polyacrylatharz (A) nach einem Zweistufenverfahren hergestellt, da so die resultierenden wäßrigen Beschichtungsmittel eine bessere Verarbeitbarkeit aufweisen. Bevorzugt werden daher Polyacrylatharze eingesetzt, die erhältlich sind, indem

I. ein Gemisch aus (a1), (a2), (a3), (a4) und (a6) oder ein Gemisch aus Teilen der Komponenten (a1), (a2), (a3), (a4) und (a6) in einem organischen Lösemittel polymerisiert wird,

II. nachdem mindestens 60 Gew.-% des aus (a1), (a2), (a3), (a4) und ggf. (a6) bestehenden Gemisches zugegeben worden sind, (a5) und der gegebenenfalls vorhandene Rest der Komponenten (a1), (a2), (a3), (a4) und (a6) zugegeben werden und weiter polymerisiert wird und

III. nach Beendigung der Polymerisation das erhaltene Polyacrylatharz zumindest teilweise neutralisiert und in Wasser dispergiert wird.

Daneben ist es aber auch möglich, die Komponente(a4) zusammen mit zumindest einem Teil des Lösemittels vorzulegen und die restlichen Komponenten zuzudosieren. Außerdem kann auch die Komponente (a4) nur teilweise zusammen mit zumindest einem Teil des Lösemittels in die Vorlage gegeben werden und der Rest dieser Komponente wie oben beschrieben zugegeben werden. Bevorzugt werden beispielsweise mindestens 20 Gew.-% des Lösemittels und ca. 10 Gew.-% der Komponente (a4) sowie ggf. Teilen der Komponenten (a1) und (a6) vorgelegt.
Bevorzugt ist außerdem die Herstellung der erfindungsgemäß eingesetzten Polyacrylatharze (A) durch ein Zweistufenverfahren, bei dem die Stufe (I) 1 bis 8 Stunden, vorzugsweise 1,5 bis 4 Stunden, dauert und die Zugabe der Mischung aus (a5) und dem ggf. vorhandenen Rest der Komponenten (a1), (a2), (a3), (a4) und (a6) innerhalb von 20 bis 120 Min., vorzugsweise innerhalb von 30 bis 90 Min., erfolgt. Nach Beendigung der Zugabe der Mischung aus (a5)und dem ggf. vorhandenen Rest der Komponenten (a1), (a2), (a3), (a4) und (a6) wird so lange weiter polymerisiert, bis alle eingesetzten Monomeren im wesentlichen vollständig umgesetzt worden sind.
Die Menge und Zugabegeschwindigkeit des Initiators wird vorzugsweise so gewählt, daß ein Polyacrylatharz (A) mit einem zahlenmittleren Molekulargewicht von 1.000 bis 7.000, bevorzugt 1.800 bis 5.000 erhalten wird. Es ist bevorzugt, die Initiatorzugabe zum gleichen Zeitpunkt wie die Zugabe der Monomeren zu beginnen und etwa eine halbe Stunde nachdem die Zugabe der Monomeren beendet worden ist, zu beenden. Der Initiator wird vorzugsweise in konstanter Menge pro Zeiteinheit zugegeben. Nach Beendigung der Initiatorzugabe wird das Reaktionsgemisch noch so lange (in der Regel 1 1/2 h) auf Polymerisationstemperatur gehalten, bis alle eingesetzten Monomere im wesentlichen vollständig umgesetzt worden sind. "Im wesentlichen vollständig umgesetzt" soll bedeuten, daß vorzugsweise 100 Gew.-% der eingesetzten Monomere umgesetzt worden sind, daß es aber auch möglich ist, daß ein geringer Restmonomerengehalt von höchstens bis zu etwa 0,5 Gew.-%, bezogen auf das Gewicht der Reaktionsmischung, unumgesetzt zurückbleiben kann.
Das erhaltene Polyacrylatharz (A) weist eine OH-Zahl von 40 bis 200, vorzugsweise 60 bis 140 mg KOH/g, eine Säurezahl von 20 bis 100 mg KOH/g, vorzugsweise 25 bis 50 mg KOH/g, auf. Besonders bevorzugt weist das erhaltene Polyacrylatharz (A) außerdem eine Glasübergangstemperatur von -40 bis +60°C, vorzugsweise -20 bis +40°C, auf.
Für die Berechnung der Glasübergangstemperatur wird der Tg-Wert des Homopolymers des Umsetzungsproduktes aus Acrylsäure und Cardura E10 gleich der Glasübergangstemperatur des Homopolymers von Isodecylmethacrylat (-41°C) gesetzt.
Nach Beendigung der Polymerisation wird das erhaltene Polyacrylatharz teilweise neutralisiert und in Wasser dispergiert. Der jeweils einzustellende Neutralisationsgrad hängt von der Säurezahl des Acrylates ab und liegt im allgemeinen bei Säurezahlen $< 70$ mg KOH/g zwischen 50 und 90 % und bei Säurezahlen $> 70$ mg KOH/g zwischen 30 und 80 %. Zur Neutralisation können sowohl organische Basen als auch anorganische Basen verwendet werden. Vorzugsweise werden primäre, sekundäre und tertiäre Amine, wie z.B. Ammoniak, Ethylamin, Propylamin, Dimethylamin, Dibutylamin, Cyclohexylamin, Benzylamin, Morpholin, Piperidin, Diethanolamin und Triethanolamin verwendet. Besonders bevorzugt werden tertiäre Amine als Neutralisationsmittel eingesetzt, insbesondere Dimethylethanolamin, Triethylamin, Dimethylisopropylamin, Tripropylamin und Tributylamin.
Die Neutralisationsreaktion wird im allgemeinen durch Mischen der neutralisierenden Base mit dem Polyacrylatharz durchgeführt. Dabei wird vorzugsweise soviel Base eingesetzt, daß die Deckbeschichtungszusammensetzung einen pH-Wert von 7 bis 8,5, vorzugsweise 7,2 bis 7,8, aufweist.
Anschließend wird das partiell oder vollständig neutralisierte Polyacrylatharz durch Zugabe von Wasser dispergiert. Dabei entsteht eine wäßrige Polyacrylatharzdispersion. Gegebenenfalls kann ein Teil oder das gesamte organische Lösemittel abdestilliert werden. Die erfindungsgemäßen Polyacrylatharzdispersionen enthalten Polyacrylatharzteilchen, deren mittlere Teilchengröße vorzugsweise zwischen 60 und 300 nm liegt (Meßmethode: Laserlichtstreuung, Meßgerät Malvern Autosizer 2 C).

Das erfindungsgemäß eingesetzte Polyacrylatharz (A) wird in den Beschichtungsmitteln üblicherweise in einer Menge von 30 bis 50 Gew.-% (berechnet als Festkörper, d.h. ohne Wasseranteil), bezogen auf das Gesamtgewicht des Beschichtungsmittels, eingesetzt.

Bei der Polyisocyanatkomponente (B) handelt es sich um beliebige organische Polyisocyanate mit aliphatisch, cycloaliphatisch, araliphatisch und/oder aromatisch gebundenen, freien Isocyanatgruppen. Bevorzugt werden Polyisocyanate mit 2 bis 5 Isocyanatgruppen pro Molekül und mit Viskositäten von 200 bis 2000 mPas (bei 23°C) eingesetzt. Gegebenenfalls können den Polyisocyanaten noch geringe Mengen organisches Lösemittel, bevorzugt 1 bis 25 Gew.-%, bezogen auf reines Polyisocyanat, zugegeben werden, um so die Einarbeitbarkeit des Isocyanates zu verbessern und ggf. die Viskosität des Polyisocyanates auf einen Wert innerhalb der obengenannten Bereiche abzusenken. Als Zusatzmittel geeignete Lösemittel für die Polyisocyanate sind beispielsweise Ethoxyethylpropionat, Methoxypropylacetat und ähnliches.

Beispiele für geeignete Isocyanate sind beispielsweise in "Methoden der organischen Chemie", Houben-Weyl, Band 14/2, 4. Auflage, Georg Thieme Verlag, Stuttgart 1963, Seite 61 bis 70, und von W. Siefken, Liebigs Ann. Chem. 562, 75 bis 136, beschrieben. Beispielsweise geeignet sind 1,2-Ethylendiisocyanat, 1,4-Tetramethylendiisocyanat, 1,6-Hexamethylendiisocyanat, 2,2,4- bzw. 2,4,4-Trimethyl-1,6-hexamethylendiisocyanat, 1,12-Dodecandiisocyanat, ω,ω'-Diisocyanatodipropylether, Cyclobutan-1,3-diisocyanat, Cyclohexan-1,3- und -1,4-diisocyanat, 2,2- und 2,6-Diisocyanato-1-methylcyclohexan, 3-Isocyanatomethyl-3,5,5-trimethylcyclohexylisocyanat(Isophorondiisoyanat"), 2,5- und 3,5-Bis(isocyanatomethyl)-8-methyl-1,4-methano-decahydronaphthalin, 1,5-, 2,5-, 1,6- und 2,6-Bis(isocyanatomethyl)-4,7-methanohexahydroindan, 1,5-, 2,5-, 1,6- und 2,6-Bis(isocyanato)-4,7-methanhexahydroindan, Dicyclohexyl-2,4'- und -4,4'-diisocyanat, 2,4- und 2,6-Hexahydrotoluylendiisocyanat, Perhydro-2,4'- und -4,4'-diphenylmethandiisocyanat, ω,ω'-Diisocyanato-1,4-diethylbenzol, 1,3- und 1,4-Phenylendiisocyanat, 4,4'-Diisocyanato-diphenyl, 4,4'-Diisocyanato-3,3'-dichlordiphenyl, 4,4'-Diisocyanato-3,3'-dimethoxy-diphenyl, 4,4'-Diisocyanato-3,3'-dimethyl-diphenyl, 4,4'-Diisocyanato-3,3'-diphenyl-diphenyl, 2,4'- und 4,4'-Diisocyanato-diphenylmethan, Naphthylen-1,5-diisocyanat, Toluylendiisocyanate, wie 2,4- bzw. 2,6-Toluylendiisocyanat, N,N'-(4,4'-Dimethyl-3,3'-diisocyanatodiphenyl)-uretdion, m-Xylylendiisocyanat, Dicyclohexylmethandiisocyanat, Tetramethylxylylendiisocyanat, aber auch Triisocyanate, wie 2,4,4'-Triisocyanatodiphenylether, 4,4',4"-Triisocyanatotriphenylmethan. Es können auch Isocyanuratgruppen und/oder Biuretgruppen und/oder Allophanatgruppen und/oder Uretdiongruppen und/oder Urethangruppen und/oder Harnstoffgruppen aufweisende Polyisocyanate eingesetzt werden. Urethangruppen aufweisende Polyisocyanate werden beispielsweise durch Umsetzung eines Teils der Isocyanatgruppen mit Polyolen, wie z.B. Trimethylolpropan und Glycerin, erhalten.

Vorzugsweise werden aliphatische oder cycloaliphatische Polyisocyanate, insbesondere Hexamethylendiisocyanat, dimerisiertes und trimerisiertes Hexamethylendiisocyanat, Isophorondiisocyanat, Dicyclohexylmethan-2,4'-diisocyanat oder Dicyclohexylmethan-4,4'-diisocyanat oder Mischungen aus diesen Polyisocyanaten eingesetzt. Ganz besonders bevorzugt werden Gemische aus Uretdion- und/oder Isocyanuratgruppen und/oder Allophanatgruppen aufweisenden Polyisocyanaten auf Basis von Hexamethylendiisocyanat, wie sie durch katalytische Oligomerisierung von Hexamethylendiisocyanat unter Verwendung von geeigneten Katalysatoren entstehen, eingesetzt. Die Polyisocyanatkomponente (B) kann im übrigen auch aus beliebigen Gemischen der beispielhaft genannten Polyisocyanate bestehen.

Zur Herstellung der gebrauchsfertigen, wäßrigen Zweikomponenten-Polyurethan-Beschichtungsmittel wird die Polyisocyanatkomponente (B) kurz vor der Applikation mit der Polyacrylatharzkomponente (A) vermischt. Die Durchmischung kann durch einfaches Verrühren bei Raumtemperatur, aber auch durch Dispergieren erfolgen. Die Polyisocyanatkomponente (B) wird dabei in solch einer Menge eingesetzt, daß das Gewichtsverhältnis zwischen Polyacrylatharzfeststoff und Polyisocyanatfeststoff 60:40 bis 90:10, besonders bevorzugt 70:30 bis 85:15, beträgt. Das Verhältnis der Anzahl der freien OH-Gruppen der Komponente (A) zur Anzahl der Isocyanatgruppen der Komponente (B) liegt dabei üblicherweise im Bereich von 1:2 bis 2:1.

Die erfindungsgemäßen wäßrigen Zweikomponenten-Polyurethanharz-Beschichtungsmittel können neben dem erfindungsgemäß eingesetzten Polyacrylatharz (A) auch noch vernetzte Polymermikroteilchen, wie sie zum Beispiel in der EP-A-38 127 offenbart sind, und/oder ein oder mehrere verträgliche Harze, wie z.B. wasserverdünnbare (s) oder wasserlösliche(s) Polyacrylatharz(e), Polyurethanharz(e), Polyesterharz(e), Alkydharz(e) oder Epoxidharzester enthalten. Der Anteil dieser(s) weiteren Harze(s) liegt üblicherweise zwischen 0 und 25 Gew.-%, bevorzugt zwischen 0 und 15 Gew.-%, jeweils bezogen auf das Gesamtgewicht des Beschichtungsmittels und den Festkörpergehalt des Bindemittels.

So können den erfindungsgemäßen Beschichtungsmitteln beispielsweise bis zu 30 Gew.-%, bezogen auf den Bindemittelfestkörper des Polyacrylatharzes (A), eines mittels Emulsionspolymerisation hergestellten Acrylates mit einer OH-Zahl, die bevorzugt zwischen 40 und 200 mg KOH/g liegt, zugesetzt werden. Die Herstellung deartiger

Emulsionspolymere ist beispielsweise in der DE-OS 40 09 000 beschrieben, wobei allerdings die OH-Zahl der Acrylate entsprechend zu erhöhen ist.

Als weiteres Bindemittel geeignet ist ferner beispielsweise auch ein hydroxylgruppenhaltiges Polyacrylatharz, das in der nicht vorveröffentlichten deutschen Patentanmeldung P 44 07 409.3 beschrieben ist und das erhältlich ist, indem

(m1)10 bis 51 Gew.-% einer Mischung aus

(m11) einem oder mehreren Monomeren, ausgewählt aus der Gruppe 4-Hydroxi-n-butylacrylat und/oder 4-Hydroxi-n-butylmethacrylat und/oder 3-Hydroxi-n-butylacrylat und/oder 3-Hydroxi-n-butylmethacrylat und

(m12) einem oder mehreren Monomeren, ausgewählt aus der Gruppe 3-Hydroxi-n-propylacrylat und/oder 3-Hydroxi-n-propylmethacrylat und/oder 2-Hydroxi-n-propylacrylat und/oder 2-Hydroxi-n-propylmethacrylat,

(m2) 0 bis 20 Gew.-% eines von (m1) verschiedenen hydroxylgruppenhaltigen Esters der Acrylsäure oder der Methacrylsäure mit mindestens 5 C-Atomen im Alkoholrest oder eines Gemisches aus solchen Monomeren,

(m3) 28 bis 85 Gew.-% eines von (m1) und (m2) verschiedenen aliphatischen oder cycloaliphatischen Esters der Acrylsäure oder der Methacrylsäure mit mindestens 4 C-Atomen im Alkoholrest oder eines Gemisches aus solchen Monomeren,

(m4) 0 bis 25 Gew.-% eines von (m1), (m2) und (m3) verschiedenen vinylaromatischen Kohlenwasserstoffs oder eines Gemisches aus solchen Monomeren,

(m5) 0 bis 10 Gew.-% einer ethylenisch ungesättigten Carbonsäure oder einer Mischung aus ethylenisch ungesättigten Carbonsäuren und

(m6) 0 bis 20 Gew.-% eines von (m1), (m2), (m3), (m4) und (m5) verschiedenen ethylenisch ungesättigten Monomeren oder eines Gemisches aus solchen Monomeren

zu einem Polyacrylatharz mit einer Hydroxylzahl von 60 bis 200 mgKOH/g, einer Säurezahl von 0 bis 80 mgKOH/g und einem zahlenmittleren Molekulargewicht von 1000 bis 5000 polymerisiert werden, wobei die Summe der Gewichtsanteile der Komponenten (m1) bis (m6) jeweils 100 Gew.-% beträgt.

Beispiele für die als Monomerkomponenten (m1) bis (m6) geeignete Verbindungen sind die bei der Beschreibung des Acrylatharzes (A) aufgeführten Verbindungen.

Darüber hinaus können die erfindungsgemäßen Beschichtungsmittel auch noch übliche Hilfs- und Zusatzstoffe, wie insbesondere Verdicker und Netzmittel, enthalten. Bevorzugt wird in den erfindungsgemäßen wäßrigen Beschichtungsmitteln ein nichtionisches Polyurethanverdickungsmittel zugesetzt, da dies zu einer besseren Transparenz und besseren Emulgierbarkeit des Polyisocyanates führt. Bevorzugt wird in den erfindungsgemäßen wäßrigen Beschichtungsmitteln außerdem ein Netzmittel auf Basis eines alkylmodifizierten Polyethers zugesetzt, da dies ebenfalls die Transparenz des Beschichtungsmittels sowie Glanz und Verlauf des Beschichtungsmittels verbessert.

Darüber hinaus können die wäßrigen Beschichtungsmittel noch weitere übliche Hilfs- und Zusatzstoffe, wie beispielsweise Entschäumungsmittel und ähnliches, enthalten. Die Einsatzmenge Hilfs- und Zusatzstoffe (einschl. Netzmittel und Verdickungsmittel) beträgt üblicherweise zwischen 0,01 und 10 Gew.-%, bezogen auf das Gesamtgewicht der Beschichtungsmittel.

Die erfindungsgemäßen wäßrigen Beschichtungsmittel können auch übliche organische Lösemittel enthalten. Deren Anteil wird möglichst gering gehalten. Er liegt üblicherweise unter 15 Gew.-%, bevorzugt bei 2 bis 10 Gew.-%, jeweils bezogen auf das Gesamtgewicht des Beschichtungsmittels.

Beispiele für geeignete Lösungsmittel sind verschiedene Ester, wie z.B. Ethylglykolacetat, Butylglykolacetat, Ethyldiglykolacetat, Ethylethoxypropionat, Methoxypropylacetat u.ä..

Die erfindungsgemäßen Lacke werden im allgemeinen auf einen pH-Wert zwischen 6,5 und 9,0 eingestellt. Der pH-Wert kann mit üblichen Aminen, wie z.B. Triethylamin, Dimethylaminoethanol und N-Methylmorpholin, eingestellt werden.

Die erfindungsgemäßen Lacke können durch übliche Applikationsmethoden, wie z.B. Spritzen, Rakeln, Streichen, Tauchen, auf beliebige Substrate, wie z.B. Metall, Holz, Kunststoff oder Papier, aufgebracht werden. Die erfindungsgemäßen Lacke werden vorzugsweise zur Herstellung von Decklackierungen eingesetzt. Die erfindungsgemäßen Lacke können sowohl bei der Serien- als auch bei der Reparaturlackierung von Automobilkarosserien eingesetzt werden. Sie werden vorzugsweise aber im Bereich der Reparaturlackierung eingesetzt. Die erfindungsgemäßen

wäßrigen Beschichtungsmittel können als Füller sowie zur Herstellung einschichtiger Decklackierungen sowie als pigmentierte Basislacke oder als Klarlacke in einem Verfahren zur Herstellung einer mehrschichtigen Lackierung eingesetzt werden (Base coat-/Clear coat-Verfahren).

Wenn die erfindungsgemäßen Lacke zur Herstellung von einschichtigen Decklackierungen oder als Basislacke eingesetzt werden, dann können sie mit Pigmenten, wie z.B. Pigmenten auf anorganischer Basis, z.B. Titandioxid, Eisenoxid, Ruß usw. und/oder Pigmenten auf organischer Basis und/oder Metallpigmenten, wie z.B. Aluminiumbronzen und/oder Perlglanz- bzw. Interferenzpigmenten, pigmentiert werden. Aluminiumbronzen und Perlglanz- bzw. Interferenzpigmente sind Beispiele für Effektpigmente. Wenn die erfindungsgemäßen Beschichtungsmittel als pigmentierte Basislacke eingesetzt werden, dann können sie mit den erfindungsgemäßen Lacken, die keine Pigmente enthalten oder nur transparent pigmentiert sind, überlackiert werden, sie können aber auch mit konventionellen Klarlacken auf Basis organischer Lösemittel, mit wäßrigen Klarlacken oder auch Pulverklarlacken überlackiert werden.

Bevorzugt werden die erfindungsgemäßen Lacke aber als Klarlacke eingesetzt.

Gegenstand der vorliegenden Erfindung ist daher auch ein Verfahren zur Herstellung eines mehrschichtigen schützenden und/oder dekorativen Überzuges auf einer Substratoberfläche, bei dem

(1) ein pigmentierter Basislack auf die Substratoberfläche aufgebracht wird,
(2) aus dem in Stufe (1) aufgebrachten Basislack ein Polymerfilm gebildet wird,
(3) auf die so erhaltene Basisschicht ein transparenter Decklack, der

(A) ein wasser verdünnbares hydroxylgruppenhaltiges Polyacrylatharz und
(B) eine polyisocyanatkomponente als Vernetzungsmittel enthält, aufgebracht wird und anschließend

(4) Basislackschicht und Decklackschicht zusammen gehärtet werden,

dadurch gekennzeichnet, daß als Decklack das erfindungsgemäße Beschichtungsmittel eingesetzt wird.

Die in diesem Verfahren eingesetzten Basislacke sind bekannt und brauchen daher nicht näher erläutert zu werden. Beispiele für geeignete Basislacke sind auch die in der DE-A 41 10 520, der DE-A 40 09 000, der DE-A 40 24 204, der EP-A-355 433, der DE-A 35 45 618, der DE-A 38 13 866 und der DE-A-42 32 717.2 beschriebenen Basislacke.

Geeignet sind außerdem die in der noch nicht veröffentlichten deutschen Patentanmeldung P 43 27 416.1 beschriebenen Basislacke, die dadurch gekennzeichnet sind, daß sie einen hydroxylgruppenhaltigen Polyester mit einem gewichtsmittleren Molekulargewicht Mw von 40.000 - 200.000 und eine Uneinheitlichkeit Mw/Mn > 8 enthalten und daß zur Herstellung des Polyesters mindestens 50 Gew.-% aromatische Dicarbonsäuren oder deren veresterungsfähige Derivate eingesetzt worden sind, wobei aber der Gehalt an Phthalsäureanhydrid maximal 80 Gew.-% beträgt und wobei die Gew.-%-Angaben jeweils auf das Gesamtgewicht der zur Herstellung des Polyesters eingesetzten Säurekomponenten bezogen sind.

Die erfindungsgemäßen Beschichtungsmittel zeichnen sich insbesondere durch eine gute Haftung auf der Basislackschicht, eine gute Kratzfestigkeit und hohe Härte der resultierenden Beschichtungen aus. Daneben weisen die Beschichtungsmittel eine schnelle Trocknung bei gleichzeitig langer Verarbeitbarkeit (Topfzeit) aus. Weiterhin zeigen die resultierenden Beschichtungen, insbesondere im Fall der Klarlackbeschichtungen, gute mechanische Eigenschaften, wie beispielsweise eine gute Glanzhaltung, eine gute Fülle und einen guten Verlauf.

In den folgenden Beispielen wird die Erfindung näher erläutert. Alle Angaben über Teile und Prozente sind Gewichtsangaben, sofern nicht ausdrücklich etwas anderes angegeben wird.

<u>I. Herstellung der hydroxylgruppenhaltigen Acrylatharze E1 bis E6 und V1 bis V3 (Vergleichsbeispiele)</u>

Die zur Herstellung der hydroxylgruppenhaltigen Acrylatharze E1 bis E6 (erfindungsgemäß) und V1 bis V3 (Vergleich) eingesetzten Monomeren sind in Tabelle 1 angegeben. Als Hydroxy-n-propyl(meth)acrylat wurde dabei eine handelsübliche Mischung aus 25 Gew.-% 3-Hydroxy-n-propyl(meth)acrylat und 75 Gew.-% 2-Hydroxy-n-propyl (meth)acrylat eingesetzt. Die Herstellung der Acrylatharze erfolgt, indem in einem für Polymerisationsreaktionen geeigneten 4 l Reaktor 34,27 % Ethylethoxypropionat, bezogen auf die Masse von 100 % der Monomerenmischung, vorgelegt und auf 130°C erwärmt wurden. Zu dieser Vorlage dosierte man gleichzeitig beginnend und gleichmäßig innerhalb von 4 Stunden eine Mischung aus 100 % der Monomeren und 0,5 % Mercaptoethanol, bezogen auf die Masse von 100 % der Monomerenmischung, sowie in 4,5 Stunden 11,9 % der Initiatorlösung, bezogen auf die Masse von 100 % der Monomerenmischung, bestehend aus einer 30,0 %igen Lösung von tert.-Butylperethylhexanoat in Ethylethoxypropionat. Nach 2 Stunden Nachpolymerisation wurde die Reaktortemperatur auf 90°C gesenkt und durch Zugabe von Dimethylethanolamin ein Neutralisationsgrad von 85 % eingestellt, bevor mit deionisiertem Wasser auf einen Festkörper von ca. 40 % verdünnt wurde. Anschließend wurde durch azeotrope Destillation unter Vakuum das

organische Lösemittel bis auf eine Restmenge von ca. ≤ 3 % entfernt und mit Wasser ein Festkörper von 40 - 45 % eingestellt.

Die Eigenschaften der resultierenden Acrylatharze sind in Tabelle 2 dargestellt.

## II. Herstellung der Beschichtungsmittel E1 bis E6 der Beispiele 1 bis 6 und der Beschichtungsmittel V1 bis V3 der Vergleichsbeispiele 1 bis 3

### II.1. Herstellung einer Härterlösung

Aus den nachfolgend angegebenen Komponenten wird durch Mischen eine Härterlösung hergestellt:

| | |
|---|---|
| Ethylethoxypropionat | 20,0 Teile |
| Desmodur® VPLS2102 1) | 45,0 Teile |
| Desmodur® N 3300 2) | 45,0 Teile |

1) Handelsübliches Polyisocyanat vom Allophanattyp der Firma Bayer AG auf Basis Hexamethylendiisocyanat mit einem Festkörpergehalt von 100 % und einem NCO-Gehalt von 19,5 %.

2) Handelsülbiches Polyisocyanat der Firma Bayer AG auf Basis eines Hexamethylendiisocyanattrimerisates mit einer mittleren Funktionalität zwischen 3 und 4 und einem Uretdiongruppengehalt zwischen 0 und 3 Gew.-% sowie einem Festkörpergehalt von 100 % und einem Isocyanatgehalt von 23,0 %.

### II.2. Herstellung der transparenten Decklacke E1 bis E6 und V1 bis V3

Aus den in Tabelle 3 angegebenen Komponenten werden die Klarlacke durch Vermischen hergestellt, wobei die Härterlösung als letztes zum Mischlack gegeben wird.

### II.3. Applikation der transparenten Decklacke E1 bis E6 und V1 bis V3 (Vergleichsbeispiele)

Der so erhaltene Lack wird dann auf phosphatierte und beschichtete Stahlbleche appliziert. Die phosphatierten Stahlbleche werden hierzu mit einem handelsüblichen konventionellen Füller (Handelsprodukt Glasurit Grundfüller EP 801-1552 der Firma Glasurit GmbH, Münster, mit einem epoxifunktionellen Bindemittel und einem aminofunktionellen Härter) mittels Spritzauftrag beschichtet (Trockenfilmschichtdicke ca. 40 bis 60 µm), 45 min bei 80°C und 16 h bei Raumtemperatur getrocknet und mit Schleifpapier P800 und Excenterschleifer naß geschliffen. Anschließend wird ein Basislack aus einer Mischung aus 80 Teilen eines handelsüblichen konventionellen Metallic-Basislackes (Handelsprodukt Basislack AE 54M 99/9 Basisfarbe Aluminium superfein der Firma Glasurit GmbH, Münster) auf Basis eines hydroxylgruppenhaltigen Polyesters, Celluloseacetobutyrat, Wachs und eines Melaminharzes und 20 Teilen eines weiteren handelsüblichen konventionellen Basislackes (Handelsprodukt Basislack AE 54M 552 Basisfarbe Helioblau der Firma Glasurit GmbH, Münster) auf Basis eines hydroxylgruppenhaltigen Polyesters, Celluloseacetobutyrat, Wachs und eines Melaminharzes aufgebracht, indem zunächst ein Spritzgang aufgetragen wird und nach einer Zwischenablüftzeit von 5 min ein zweiter Spritzgang aufgebracht wird (Spritzdruck jeweils 4 - 5 bar). Die Trockenfilmschichtdicke des Basislackes beträgt ca. 20 µm. Nach einer Ablüftzeit von 30 min. wird der Klarlack appliziert, indem zunächst ein Spritzgang aufgetragen wird und nach einer Zwischenablüftzeit von 3 min ein zweiter Spritzgang aufgebracht wird (Spritzdruck jeweils 4 - 5 bar). Die Tafeln werden dann je nach durchgeführter Prüfung unter verschiedenen Bedingungen getrocknet. Die Trockenfilmschichtdicke des Klarlackes beträgt ca. 50 - 80 µm.

Die Ergebnisse der Prüfung der resultierenden Beschichtungen sind in der Tabelle 4 dargestellt.

Tabelle 1: Zusammensetzung der Acrylatharze in Gew.-%

| | E1 | V1 | E2 | E3 | V2 | E4 | E5 | E6 | V3 |
|---|---|---|---|---|---|---|---|---|---|
| Styrol | 23 | 23 | 24 | 16 | 16 | - | 24 | - | 24 |
| n-BMA | 6 | 6 | 6,5 | 6 | 6 | 9 | 6,5 | 9,5 | 21,5 |
| t-BA | - | 14 | - | - | - | - | - | - | - |
| t-BCA | 14 | - | 15 | 38 | - | 22 | 15 | 23 | - |
| MMA | 16 | 16 | 17 | - | 37 | 28 | 17 | 30 | 17 |
| EHA | - | - | - | 6 | 7 | - | - | - | - |
| HPMA | 36 | 36 | - | - | 29 | 36 | - | - | - |
| HPA | - | - | 32,5 | 29 | - | - | - | - | - |
| HEMA | - | - | - | - | - | - | 32,5 | 32,5 | 32,5 |
| AS | 5 | 5 | 5 | 5 | 5 | 5 | 5 | 5 | 5 |

Erläuterungen zu Tabelle 1

| | |
|---|---|
| n-BMA = | n-Butylmethacrylat |
| t-BA = | t-Butylacrylat |
| t-BCA = | t-Butylcyclohexylacrylat |
| MMA = | Methylmethacrylat |
| EHA = | 2-Ethylhexylacrylat |
| HPMA = | Mischung aus 25 Gew.-% 3-Hydroxi-n-propylmethacrylat und 75 Gew.-% 2-Hydroxi-n-propylmethacrylat |
| HPA = | Mischung aus 25 Gew.-% 3-Hydroxi-n-propylacrylat und 75 Gew.-% 2-Hydroxi-n-propylacrylat |
| HEMA = | 2-Hydroxiethylmethacrylat |
| AS = | Acrylsäure |

Tabelle 2: Eigenschaften der Acrylatharze

| | E1 | V1 | E2 | E3 | V2 | E4 | E5 | E6 | V3 |
|---|---|---|---|---|---|---|---|---|---|
| OH-Zahl [mgKOH/g] | 140 | 140 | 140 | 125 | 113 | 140 | 138 | 140 | 140 |
| Säurezahl [mgKOG/g] | 40 | 40 | 40 | 40 | 40 | 40 | 40 | 40 | 40 |
| $M_n$ | 2.300 | 3.200 | 3.100 | 3.100 | 3.400 | 2.900 | 3.200 | 3.000 | 2.700 |
| $M_w$ | 5.800 | 7.500 | 10.200 | 7.200 | 9.400 | 7.800 | 7.600 | 8.900 | 6.900 |
| $M_n/M_w$ | 2,52 | 2,34 | 3,29 | 2,32 | 2,76 | 2,69 | 2,38 | 2,97 | 2,56 |
| $T_g$ (A) [°C][1)] | 81 | 81 | 49 | 37 | 72 | 77 | 82 | 71 | 66 |
| $T_g$ (a31) [°C] | 73 | 73 | -7 | -7 | 73 | 73 | 55 | 55 | 55 |
| $T_g$ (a2) [°C] | 82 | 79 | 82 | 15 | 65 | 83 | 82 | 83 | 71 |

1) berechnet unter Verwendung des experimentellen $T_g$-Wertes von 4-t-Butylcyclohexylacrylat gleich 73°C

Tabelle 3:

| Zusammensetzung der Klarlacke in Gewichtsteilen | | | | | | | | | |
|---|---|---|---|---|---|---|---|---|---|
| | KE1 | KV1 | KE2 | KE3 | KV2 | KE4 | KE5 | KE6 | KV3 |
| AE1 1) | 74,- | - | - | - | - | - | - | - | - |
| AV1 1) | - | 74,- | - | - | - | - | - | - | - |
| AE2 1) | - | - | 74,- | - | - | - | - | - | - |
| AE3 1) | - | - | - | 74,- | - | - | - | - | - |
| AV2 1) | - | - | - | - | 74,- | - | - | - | - |
| AE4 1) | - | - | - | - | - | 74,- | - | - | - |
| AE5 1) | - | - | - | - | - | - | 74,- | - | - |
| AE6 1) | - | - | - | - | - | - | - | 74,- | - |
| AV3 1) | - | - | - | - | - | - | - | - | 74,- |
| LS1 2) | 0,9 | 0,9 | 0,9 | 0,9 | 0,9 | 0,9 | 0,9 | 0,9 | 0,9 |
| LS2 3) | 0,9 | 0,9 | 0,9 | 0,9 | 0,9 | 0,9 | 0,9 | 0,9 | 0,9 |
| VLM 4) | 0,2 | 0,2 | 0,2 | 0,2 | 0,2 | 0,2 | 0,2 | 0,2 | 0,2 |
| PGL 5) | 4,0 | 4,0 | 4,0 | 4,0 | 4,0 | 4,0 | 4,0 | 4,0 | 4,0 |
| NCO 6) | 20,0 | 20,0 | 20,0 | 20,0 | 20,0 | 20,0 | 20,0 | 20,0 | 20,0 |

Erläuterungen zu Tabelle 3

1) in Tabelle 1 beschriebene Acrylatdispersionen E1 bis E6 und V1 bis V3, die auf einen Festkörpergehalt von 40 % eingestellt wurden und mit Dimethylethanolamin zu 85 % neutralisiert wurden

2) Tinuvin®123 der Firma Ciba Geigy, handelsübliches Lichtschutzmittel auf Basis eines sterisch gehinderten Amins (HALS)

3) Tinuvin® 384 der Firma Ciba Geigy, handelsübliches Lichtschutzmittel auf Basis Benztriazol

4) Verlaufshilfsmittel, Byk 331 und Tegoflow 425 der Firma Goldschmidt, jeweils 0,05 Teile

5) Proglyde DMM der Firma Dow, Dipropylenglykoldimethylether

6) Unter Punkt II.1. beschriebene Härterlösung.

Tabelle 4: Prüfergebnisse der Beschichtungsmittel/Beschichtungen

| | KE1 | KV1 | KE2 | KE3 | KV2 | KE4 | KE5 | KE6 | KV3 |
|---|---|---|---|---|---|---|---|---|---|
| Haftung | 29 | 20 | 3 | 2 | 30 | 5 | 75 | 61 | >75 |
| | | | | | | | | | |
| Viskosität (s) | 30 | 30 | 30 | 30 | 30 | 30 | 30 | 30 | 30 |
| | | | | | | | | | |
| nach 2h | 30 | 29 | 29 | 29 | 30 | 30 | 31 | 31 | 31 |
| | | | | | | | | | |
| Staubfrei (min) | 146 | 158 | 209 | 149 | 105 | 148 | 103 | 130 | 125 |
| Klebfrei (min) | 310 | 335 | 450 | 360 | 285 | 290 | 215 | 225 | 215 |
| Benzintest (Tage) | 9 | >21 | 10 | 9 | 11 | 7 | 9 | 7 | 11 |
| Volvotest | m0/g0 | m0/g0 | m0/g0 | m0/g0 | m2/g1 | m0/g0 | m2/g1-2 | m2/g1 | m1/g2 |
| | | | | | | | | | |
| Farbton Vgl | | | | | | | | | |
| Aufsicht | - | dk. | gl. | hl. | l.dk. | hl. | hl. | hl. | dk. |
| Schrägsicht | - | hl. | gl. | gl. | l.hl. | gl. | dk. | dk. | gl. |
| Beurteilung | i.O. | n.i.O. | i.O. | i.O. | n.i.O. | i.O. | i.O. | i.O. | n.i.O. |

Erläuterungen zu Tabelle 4

Die in der Tabelle 4 angeführten Prüfungen werden folgendermaßen durchgeführt:

**Farbton nach DIN6174:**

Normlichtart D
3 Winkelmeßgerät MMK111, Fa. Datacolor

Als Basisfarbe wurde eine Mischung der handelsüblichen Basisfarben der Fa. BASF L+F, (Münster-Hiltrup, Deutschland) der Reihe 54 verwandt. Zum Einsatz kam eine Mischung von 80 Gew. Teilen 54M 99/9 Basisfarbe Aluminium superfein und 20 Gew. Teilen 54M 552 Basisfarbe Helioblau. Der Testlack wird auf ein 40x60cm Stahlblech wie unter Punkt II.6. beschrieben appliziert und 30 min bei 60°C getrocknet. Nach 24 h Lagerung bei Raumtemperatur wird die Farbtonprüfung durchgeführt. Die Tafeln werden unter einer Neonlampe Osram Universal weiß ausgewertet:

1. Aufsicht: Die Tafeln werden im Winkel von ca. 20° zur Senkrechten mit der Standardtafel (beschichtet mit dem erfindungsgemäßen Klarlack des Beispiels 1) verglichen.

2. Schrägsicht: Die Tafeln werden im Winkel von ca. 70° zur Senkrechten mit der Standardtafel (beschichtet mit dem erfindungsgemäßen Klarlack des Beispiels 1) verglichen.

Bewertung:

Der Hell/Dunkelwechsel zwischen Aufsicht und Schrägsicht sollte möglichst ausgeprägt sein. Die Aufsicht ist in Ordnung, wenn die Tafel mit dem Testklarlack die gleiche oder eine größere Helligkeit wie die Standardtafel aufweist. Die Schrägsicht ist in Ordnung, wenn die Tafel mit dem Testlack die gleiche oder eine geringere Helligkeit wie die Standardtafel aufweist.

**Haftungsprüfung mit dem Hochdruckreiniger:**

Hochdruckreiniger
80 bar Druck
Durchlaufmenge 8001/h
Temperatur:Kalt
Abstand der Düse zur Testtafel:5cm

Der Testlack wird auf ein 40x60cm Stahlblech wie unter Punkt II.6. beschrieben appliziert und 30 min bei 60°C getrocknet. Nach 7 Tagen Lagerung bei Raumtemperatur wird mit einem Messer ein Dreieck mit 10 cm Seitenlänge durch die Lackschichten geschnitten. Der Schnitt muß bis zum Substrat erfolgen. Anschließend werden die Seiten des Dreiecks mit dem Hochdruckreinigerstrahl jeweils 10 s belastet.
Auswertung: Über das Dreieck wird ein quadratisch geschittenes Metallgitter mit 1/2 Zoll (1,3 cm) Maschenweite und insgesamt 6 Zoll (15,4 cm) Kantenlänge gelegt (144 Quadrate). Jedes Quadrat, in dem ein Haftungsverlust zwischen Klarlack und Basislack vorkommt, wird gezählt.

**Staubfreiheit:**

Ca. 15 Minuten nach dem Aufspritzen des Lackes wird die Tafel an einer Ecke mit einer kleinen Probe Seesand (3 - 4 g) bestreut. Die Tafel wird dann aus einer Höhe von 30 cm mit der Kante aufgestoßen (freier Fall). Staubfreiheit ist erreicht, wenn keine Sandanhaftung vorliegt. Die Prüfung wird nach jeweils 15 Minuten wiederholt, kurz vor Erreichen der Staubfreiheit wird das Wiederholungsintervall auf 5 Minuten verkürzt.

**Klebfreiheit:**

Ca. 20 Minuten nach Erreichen der Staubfreiheit wird die lackierte Tafel mit einem ca. $3cm^2$ Blättchen Papier

belegt. Auf dieses Papier wird eine kleine Platte aus Hartkunstoff gelegt, auf das dann ein Gewicht von 100g aufgelegt wird. Nach genau 1 Minute wird wie beim Test auf Staubfreiheit geprüft, ob das Papier noch anhaftet. Die Prüfung wird nach jeweils 15 Minuten wiederholt, kurz vor Erreichen der Klebfreiheit wird das Wiederholungsintervall auf 5 Minuten verkürzt

**Benzinfestigkeit:**

Wie oben beschrieben, wird der Klarlack auf phosphatierte, beschichtete Stahlbleche, die mit dem obenbeschriebenen Füller und Basislack beschichtet sind, appliziert und bei Raumtemperatur getrocknet. Nach 24-stündiger Lagerung bei Raumtemperatur wird erstmals die Benzinfestigkeit geprüft.
Durchführung: Ein mit 1 ml Superbenzin (bleifrei) getränktes Wattepad (Filtergrad, Typ T950, Größe 2,3 der Firma Seitz), das auf der Unterseite eine gitterförmige Struktur besitzt, wird auf die Lackschicht gelegt und mit einem 100 g Gewicht 5 Minuten belastet. Danach wird die durch die Anquellung der Lackoberfläche hervorgerufene Struktur visuell beurteilt: nicht markiert, markiert, sehr leicht markiert, leicht markiert, markiert, stark markiert, sehr stark markiert. Angegeben ist die Zeitdauer der Lagerung bei Raumtemperatur in Tagen, nach denen der Benzintest in Ordnung ist, d.h. keine Markierung sichtbar ist.

**Viskosität:**

Die Viskosität wird jeweils als Auslaufzeit im DIN 4-Becher bei 20°C gemessen.

**Volvo Crack Test:**

Prüfbedingungen 1 Cyclus:

4h bei 50 °C im Ofen
2h bei 35 °C und 95-100 % rel. Luftfeuchte
2h bei 35 °C und 95-100 % rel. Luftfeuchte und 21 Schwefeldioxid
16h bei -30 °C im Tiefkühlschrank
Tafel mit Wasser waschen und trocknen Auswertung:

Blasengrad nach DIN 53209
Risse ASTM D660

III. Zusammenfassung der Prüfergebnisse

Die Beschichtungsmittel der Beispiele 1 bis 6 führen zu Beschichtungen mit einem guten Decklackstand, hoher Härte und hohem Glanz. Vorteilhaft ist ferner gute Transparenz und daß der Basislack nicht angelöst wird.
Der Klarlack E1 des Beispiels 1 zeigt eine ausreichende Haftung bei guter Trocknung. Der Hell/Dunkelwechsel des Basislacks ist gut. Demgegenüber zeigt der Klarlack V1 des Vergleichsbeispiels 1 eine schlechtere Trocknung, schlechtere Benzinfestigkeit und eine leichte Anlösung des Basislacks. Der Hell/Dunkelwechsel ist nicht mehr ausreichend.
Der Klarlack E2 des Beispiels 2 zeigt gegenüber dem Klarlack des Beispiels 1 eine deutlich bessere Haftung. Der Hell/Dunkelwechsel des Basislacks ist gut. Die Trocknung ist allerdings langsamer als die der Klarlacke des Beispiels 1 und des Vergleichsbeispiels V1.
Der Klarlack des Beispiels E5 ist in der Haftung schlechter als der der Beispiele E1 bis E4. Allerdings ist die Haftung deutlich besser als die des Klarlacks des Vergleichsbeispiels V3. Der Hell/Dunkelwechsel des Basislacks ist hier besser als der des Vergleichsbeispiels 3.
Der Klarlack des Beispiels 3 zeigt gegenüber dem Klarlack des Beispiels 1 eine deutlich bessere Haftung. Der Hell/Dunkelwechsel des Basislacks ist gut. Die Trocknung ist allerdings langsamer als die der Klarlacke des Beispiels 1 und des Vergleichsbeispiels V1.
Der Klarlack des Vergleichsbeispiels V2 zeigt ausreichende Haftung. Der Hell/Dunkelwechsel des Basislacks ist dagegen nicht ausreichend.
Der Hell/Dunkelwechsel des Klarlacks des Beispiels 4 ist gut und die Haftung ist deutlich besser als die des Klarlacks des Beispiels 1.
Der Klarlack des Beispiels E6 zeigt eine schlechtere Haftung als der der Beispiele E1 bis E4, die aber gegenüber der Haftung des Klarlacks des Vergleichsbeispiels V3 deutlich verbessert ist. Der Hell/Dunkelwechsel des Basislacks ist gut.

## Patentansprüche

1. Wäßriges Zweikomponenten-Polyurethan-Beschichtungsmittel, enthaltend

A) ein wasserverdünnbares, Hydroxyl- und Carboxylatgruppen aufweisendes Polyacrylatharz (A) mit einer OH-Zahl von 40 bis 200 mg KOH/g und einer Säurezahl von 20 bis 100 mg KOH/g und

B) eine Polyisocyanatkomponente (B) als Vernetzungsmittel,

wobei die Polyisocyanatkomponente (B) in solch einer Menge eingesetzt wird, daß das Gewichtsverhältnis zwischen Polyacrylatharzfeststoff und Polyisocyanatfeststoff 60:40 bis 90:10 beträgt,
wobei die Komponente (A) ein hydroxylgruppenhaltiges Polyacrylatharz ist, das erhältlich ist, indem in einem organischen Lösemittel oder Lösemittelgemisch und in Gegenwart mindestens eines Polymerisationsinitiators

(a1) ein von (a2), (a3), (a4) und (a6) verschiedener, mit (a2), (a3), (a4), (a5) und (a6) copolymerisierbarer, im wesentlichen carboxylgruppenfreier Ester aus (Meth)acrylsäure und einem cycloaliphatischen C6 bis C10 Alkohol, ausgenommen Cyclohexylmethacrylat, oder ein Gemisch aus solchen Monomeren,

(a2) ein von (a1), (a3), (a4) und (a6) verschiedener, mit (a1), (a3), (a4), (a5) und (a6) copolymerisierbarer, im wesentlichen carboxylgruppenfreier (Meth)acrylsäureester oder ein Gemisch aus solchen Monomeren,

(a3) ein mit (a1), (a2), (a4), (a5) und (a6) copo-lymerisierbares, ethylenisch ungesättigtes Monomer, das mindestens eine Hydroxylgruppe pro Molekül trägt und im wesentlichen carboxylgruppenfrei ist, oder ein Gemisch aus solchen Monomeren,

(a4) ggf. ein oder mehrere Vinylester von in α-Stellung verzweigten Monocarbonsäuren mit 5 bis 18 C-Atomen je Molekül und/oder mindestens ein Umsetzungsprodukt aus Acrylsäure und/oder Methacrylsäure mit dem Glycidylester einer in α-Stellung verzweigten Monocarbonsäure mit 5 bis 18 C-Atomen je Molekül oder anstelle des Umsetzungsproduktes eine äquivalente Menge Acryl- und/oder Methacrylsäure, die dann während oder nach der Polymerisationsreaktion mit dem Glycidylester einer in α-Stellunq verzweigten Monocarbonsäure mit 5 bis 18 C-Atomen je Molekül umgesetzt wird,

(a5) ein mindestens eine Carboxylgruppe pro Molekül tragendes, mit (a1), (a2), (a3), (a4) und (a6) copolymerisierbares, ethylenisch ungesättigtes Monomer oder ein Gemisch aus solchen Monomeren und

(a6) ggf. ein mit (a1), (a2), (a3), (a4) und (a5) copolymerisierbares, von (a1), (a2), (a3) und (a4) verschiedenes, im wesentlichen carboxylgruppenfreies, ethylenisch ungesättigtes Monomer oder ein Gemisch aus solchen Monomeren

polymerisiert werden und nach Beendigung der Polymerisation das erhaltene Polyacrylatharz ggf. zumindest teilweise neutralisiert und in Wasser dispergiert wird, wobei (a1), (a2), (a3), (a4), (a5) und (a6) in Art und Menge so ausgewählt werden, daß das Polyacrylatharz (A) die gewünschte OH-Zahl und Säurezahl aufweist,
wobei die Formulierung "im wesentlichen carboxylgruppenfrei" definiert, daß die Komponenten (a1), (a2), (a3), (a4) und (a6) einen so geringen Carboxylgruppengehalt aufweisen, daß ein aus diesen Komponenten hergestelltes Polyacrylatharz eine Säurezahl von höchstens 10 mg KOH/g hat.

2. Beschichtungsmittel nach Anspruch 1, **dadurch gekennzeichnet, daß** als Komponente (a3) zumindest teilweise nur Monomere oder Mischungen von Monomeren eingesetzt werden, die bei alleiniger Polymerisation des jeweiligen Monomers ein Polyacrylat-und/oder Polymethacrylatharz mit einer Glasübergangstemperatur von -20°C bis +6°C oder von +50°C bis 80°C ergeben.

3. Beschichtungsmittel nach Anspruch 1 oder 2, **dadurch gekennzeichnet, daß** die Komponente (a2) so ausgewählt wird, daß bei alleiniger Polymerisation der Komponente (a2) ein Polyacrylat- und/oder Polymethacrylatharz mit einer Glasübergangstemperatur von -70°C bis +120°C erhalten wird.

4. Beschichtungsmittel nach einem der Ansprüche 1 bis 3, **dadurch gekennzeichnet, daß** die Komponente (a2) ausgewählt ist aus n-Butylmethacrylat, n-Butylacrylat, t-Butylmethacrylat, t-Butylacrylat, i-Butylmethacrylat, i-Butylacrylat, Methylmethacrylat, Methylacrylat, 2-Ethylhexylmethacrylat, 2-Ethylhexylacrylat, Laurylmethacrylat, Laurylacrylat, Stearylmethacrylat, Stearylacrylat, Ethyltriglykolmethacrylat, Furfurylmethacrylat und Furfurylacrylat.

**5.** Beschichtungsmittel nach einem der Ansprüche 1 bis 4, **dadurch gekennzeichnet, daß** die Komponente (a1) ausgewählt ist aus Cyclohexylacrylat, Isobornylmethacrylat, Isobornylacrylat, 4-t-Butylcyclo-hexylacrylat und/oder 4-Butylcyclohexylmethacrylat und bevorzugt ausgewählt ist aus 4-t-Butylcyclohexylacrylat und/oder 4-Butylcyclohexylmeth acrylat.

**6.** Beschichtungsmittel nach einem der Ansprüche 1 bis 5, **dadurch gekennzeichnet, daß** das Acrylatharz erhältlich ist aus

(a1) 5 bis 80 Gew.-%, bevorzugt 5 bis 30 Gew.-%, der Komponente (a1),
(a2) 5 bis 80 Gew.-%, bevorzugt 5 bis 30 Gew.-%, der Komponente (a2),
(a3) 10 bis 60 Gew.-%, bevorzugt 10 bis 40 Gew.-%, der Komponente (a3),
(a4) 0 bis 20 Gew.-%, bevorzugt 0 bis 15 Gew.-%, der Komponente (a4),
(aS) 1 bis 15 Gew.-%, bevorzugt 2 bis 8 Gew.-%, der Komponente (aS) und
(a6) 0 bis 40 Gew.-%, bevorzugt 0 bis 30 Gew.-%, der Komponente (a6),

wobei die Summe der Gewichtsanteile der Komponenten (a1) bis (a6) jeweils 100 Gew.-% beträgt.

**7.** Beschichtungsmittel nach einem der Ansprüche 1 bis 6, **dadurch gekennzeichnet, daß** das Polyacrylatharz ein zahlenmittleres Molekulargewicht Mn von 1000 bis 7000, bevorzugt von 1800 bis 5000, ein Verhältnis von gewichtsmittlerem Molekulargewicht Mw zu zahlenmittlerem Molekulargewicht Mn von weniger als 5,0, bevorzugt von 1,8 bis 4,0, und/oder eine OH-Zahl von 60 bis 140 mg KOH/g und/oder eine Säurezahl von 25 bis 50 mg KOH/g aufweist.

**8.** Beschichtungsmittel nach einem der Ansprüche 1 bis 7, **dadurch gekennzeichnet, daß** das Beschichtungsmittel als Vernetzungsmittel (B) mindestens ein Di- und/oder Polyisocyanat, bevorzugt mindestens ein isocyanuratgruppenhaltiges Di- und/oder Polyisocyanat, enthält.

**9.** Beschichtungsmittel nach einem der Ansprüche 1 bis 8, **dadurch gekennzeichnet, daß** es mindestens ein weiteres, von dem Acrylatharz (A) verschiedenes Bindemittel, bevorzugt mindestens ein von (A) verschiedenes weiteres, wasserverdünnbares oder wasserlösliches Polyacrylatharz und/oder Polyurethanharz und/oder Polyesterharz und/oder Alkydharz und/oder Epoxidharzester enthält.

**10.** Verfahren zur Herstellung eines mehrschichtigen schützenden und/oder dekorativen Überzuges auf einer Substratoberfläche, bei dem

(1) ein pigmentierter Basislack auf die Substratoberfläche aufgebracht wird,

(2) aus dem in Stufe (1) aufgebrachten Basislack ein Polymerfilin gebildet wird,

(3) auf die so erhaltene Basisschicht ein transparenter Decklack aufgebracht wird, der

(A) ein wasserverdünnbares, hydroxylgruppenhaltiges Polyacrylatharz und
(B) eine Polyisocyanatkomponente als Vernetzungsmittel

enthält, aufgebracht wird und anschließend

(4) Basislackschicht und Decklackschicht zusammen gehärtet werden,

**dadurch gekennzeichnet, daß** als Decklack ein Beschichtungsmittel nach einem der Ansprüche 1 bis 9 eingesetzt wird.

**11.** Verwendung der Beschichtungsmittel nach einem der Ansprüche 1 bis 9 im Bereich der Autoreparaturlackierung, insbesondere als Decklack.

## Claims

1. Aqueous two-component polyurethane coating composition comprising

   A) a water-dilutable polyacrylate resin (A) containing hydroxyl groups and carboxylate groups and having an OH number of from 40 to 200 mg of KOH/g and an acid number of from 20 to 100 mg of KOH/g, and

   B) a polyisocyanate component (B) as crosslinking agent,

   where the polyisocyanate component (B) is employed in a quantity such that the weight ratio of polyacrylate resin solids to polyisocyanate solids is from 60:40 to 90:10,
   component (A) being a hydroxyl-containing polyacrylate resin which is obtainable by polymerizing, in an organic solvent or solvent mixture and in the presence of at least one polymerization initiator

   (a1) an essentially carboxyl-free ester of (meth)-acrylic acid and a cycloaliphatic $C_6$ to $C_{10}$ alcohol, which ester is different from (a2), (a3), (a4) and (a6), is copolymerizable with (a2), (a3), (a4), (a5) and (a6) and is not cyclohexyl methacrylate, or a mixture of such monomers,

   (a2) an essentially carboxyl-free (meth)acrylic ester which is different from (a1), (a3), (a4) and (a6) and is copolymerizable with (a1), (a3), (a4), (a5) and (a6), or a mixture of such monomers,

   (a3) an ethylenically unsaturated monomer which is copolymerizable with (a1), (a2), (a4), (a5) and (a6) carries at least one hydroxyl group per molecule and is essentially free of carboxyl groups, or a mixture of such monomers,

   (a4) if desired, one or more vinyl esters of α-branched monocarboxylic acids having 5 to 18 carbon atoms per molecule and/or at least one reaction product of acrylic acid and/or methacrylic acid with the glycidyl ester of an α-branched monocarboxylic acid having 5 to 18 carbon atoms per molecule or, instead of the reaction product, an equivalent quantity of acrylic and/or methacrylic acid which is then reacted, during or after the polymerization reaction, with the glycidyl ester of an α-branched monocarboxylic acid having 5 to 18 carbon atoms per molecule,

   (a5) an ethylenically unsaturated monomer carrying at least one carboxyl group per molecule and copolymerizable with (a1), (a2), (a3), (a4) and (a6), or a mixture of such monomers, and

   (a6) if desired, an essentially carboxyl-free, ethylenically unsaturated monomer which is copolymerizable with (a1), (a2), (a3), (a4) and (a5) and is different from (a1), (a2), (a3) and (a4), or a mixture of such monomers,

   and, after the end of the polymerization, if desired, the resulting polyacrylate resin is at least partially neutralized and dispersed in water, the nature and quantity of (a1), (a2), (a3), (a4), (a5) and (a6) being selected such that the polyacrylate resin (A) has the desired OH number and acid number,
   the formulation "essentially carboxyl-free" defining that the components (a1), (a2), (a3), (a4) and (a6) have such a low carboxyl group content that a polyacrylate resin prepared from the components has an acid number of at most 10 mg of KOH/g.

2. Coating composition according to claim 1, **characterized in that** as component (a3), at least in part, only monomers or mixtures of monomers are employed which, on polymerization of the respective monomer alone give a polyacrylate resin and/or polymethacrylate resin having a glass transition temperature of from -20°C to +6°C or from +50°C to 80°C.

3. Coating composition according to claim 1 or 2, **characterized in that** component (a2) is selected such that the polymerization of component (a2) alone produces a polyacrylate resin and/or polymethacrylate resin having a glass transition temperature of from -70°C to +120°C.

4. Coating composition according to one of claims 1 to 3, **characterized in that** component (a2) is selected from n-butyl methacrylate, n-butyl acrylate, t-butyl methacrylate, t-butyl acrylate, i-butyl methacrylate, i-butyl acrylate, methyl methacrylate, methyl acrylate, 2-ethylhexyl methacrylate, 2-ethylhexyl acrylate, lauryl methacrylate, lauryl acrylate, stearyl methacrylate, stearyl acrylate, ethyltriglycol methacrylate, furfuryl methacrylate and furfuryl acrylate.

5. Coating composition according to one of claims 1 to 4, **characterized in that** component (a1) is selected from cyclohexyl acrylate, isobornyl methacrylate, isobornyl acrylate, 4-t-butylcyclohexyl acrylate and/or 4-butylcyclohexyl methacrylate and is preferably selected from 4-t-butylcyclohexyl acrylate and/or 4-butylcyclohexyl methacrylate.

6. Coating composition according to one of claims 1 to 5, **characterized in that** the acrylic resin is obtainable from

   (a1) from 5 to 80 % by weight, preferably from 5 to 30 % by weight, of component (a1),
   (a2) from 5 to 80 % by weight, preferably from 5 to 30 % by weight, of component (a2),
   (a3) from 10 to 60 % by weight, preferably from 10 to 40 % by weight, of component (a3),
   (a4) from 0 to 20 % by weight, preferably from 0 to 15 % by weight, of component (a4),
   (a5) from 1 to 15 % by weight, preferably from 2 to 8 % by weight, of component (a5) and
   (a6) from 0 to 40 % by weight, preferably from 0 to 30 % by weight, of component (a6),

   the sum of the proportions by weight of components (a1) to (a6) being in each case 100 % by weight.

7. Coating composition according to one of claims 1 to 6, **characterized in that** the polyacrylate resin has a number-average molecular weight Mn of from 1000 to 7000, preferably from 1800 to 5000, a ratio of weight-average molecular weight Mw to number-average molecular weight Mn of less than 5.0, preferably from 1.8 to 4.0, and/or an OH number of from 60 to 140 mg of KOH/g and/or an acid number of from 25 to 50 mg of KOH/g.

8. Coating composition according to one of claims 1 to 7, **characterized in that** the coating composition comprises as crosslinking agent (B) at least one di- and/or polyisocyanate, preferably at least one di- and/or polyisocyanate which contains isocyanurate groups.

9. Coating composition according to one of claims 1 to 8, **characterized in that** it comprises at least one further binder other than the acrylic resin (A), preferably at least one further, water-dilutable or water-soluble polyacrylate resin, which is different from (A), and/or polyurethane resin and/or polyester resin and/or alkyd resin and/or epoxy resin ester.

10. Method of producing a multilayer protective and/or decorative coating on a substrate surface, in which

    (1) a pigmented basecoat is applied to the substrate surface,

    (2) a polymer film is formed from the basecoat applied in step (1),

    (3) a transparent topcoat is applied to the resulting basecoat, which topcoat comprises

       (A) a water-dilutable hydroxyl-containing polyacrylate resin and
       (B) a polyisocyanate component as crosslinking agent,

    and subsequently

    (4) basecoat and topcoat are cured together,

    **characterized in that** a coating composition according to one of claims 1 to 9 is employed as topcoat.

11. Use of the coating compositions according to one of claims 1 to 9 in the sector of automotive refinishing, especially as topcoat.

**Revendications**

1. Composition aqueuse de revêtement à base de polyuréthanne, à deux composants, contenant

   A) une résine polyacrylate (A) diluable à l'eau, comportant des groupes hydroxy et carboxylate, ayant un indice

de groupes OH de 40 à 200 mg de KOH/g et un indice d'acide de 20 à 100 mg de KOH/g, et
B) un composant polyisocyanate (B) en tant qu'agent de réticulation,

le composant polyisocyanate (B) étant utilisé en une quantité telle que le rapport pondéral entre la matière solide de type résine polyacrylate et la matière solide de type polyisocyanate va de 60:40 à 90:10,
le composant (A) étant une résine polyacrylate contenant des groupes hydroxy, qui peut être obtenue par polymérisation, dans un solvant organique ou mélange de solvants organiques et en présence d'au moins un amorceur de polymérisation,

(a1) d'un ester d'acide (méth)acrylique et d'un alcool cycloaliphatique en $C_6$-$C_{10}$, pratiquement exempt de groupes carboxy, différent de (a2), (a3), (a4) et (a6), copolymérisable avec (a2), (a3), (a4), (a5) et (a6), à l'exclusion du méthacrylate de cyclohexyle, ou d'un mélange de tels monomères,
(a2) d'un ester d'acide (méth)acrylique pratiquement exempt de groupes carboxy, différent de (a1), (a3), (a4) et (a6), copolymérisable avec (a1), (a3), (a4), (a5) et (a6), ou d'un mélange de tels monomères,
(a3) d'un monomère à insaturation éthylénique, copolymérisable avec (a1), (a2), (a4), (a5) et (a6), qui porte au moins un groupe hydroxy par molécule et est pratiquement exempt de groupes carboxy, ou d'un mélange de tels monomères,
(a4) éventuellement d'un ou plusieurs esters vinyliques d'acides monocarboxyliques ramifiés en position $\alpha$, ayant de 5 à 18 atomes de carbone par molécule et/ou d'au moins un produit de réaction d'acide acrylique et/ou d'acide méthacrylique avec l'ester glycidylique d'un acide monocarboxylique ramifié en position $\alpha$, ayant de 5 à 18 atomes de carbone par molécule, ou, au lieu du produit de réaction, d'une quantité équivalente d'acide acrylique et/ou méthacrylique qui est ensuite mis en réaction, pendant ou après la réaction de polymérisation, avec l'ester glycidylique d'un acide monocarboxylique ramifié en position $\alpha$, ayant de 5 à 18 atomes de carbone par molécule,
(a5) d'un monomère à insaturation éthylénique, portant au moins un groupe carboxy par molécule, copolymérisable avec (a1), (a2), (a3), (a4) et (a6), ou d'un mélange de tels monomères, et
(a6) éventuellement d'un monomère à insaturation éthylénique pratiquement exempt de groupes carboxy, différent de (a1), (a2), (a3) et (a4), copolymérisable avec (a1), (a2), (a3), (a4) et (a5), ou d'un mélange de tels monomères,

et, une fois terminée la polymérisation, la résine polyacrylate obtenue est éventuellement au moins en partie neutralisée et dispersée dans l'eau, (a1), (a2), (a3), (a4), (a5) et (a6) étant choisis en nature et en quantité de manière que la résine polyacrylate (A) présente l'indice de groupes OH et l'indice d'acide désirés,
la formule "pratiquement exempt de groupes carboxy" signifiant que les composants (a1), (a2), (a3), (a4) et (a6) présentent une teneur en groupes carboxy tellement faible qu'une résine polyacrylate préparée à partir de ces composants a un indice d'acide d'au maximum 10 mg de KOH/g.

2. Composition de revêtement selon la revendication 1, **caractérisée en ce qu'**on utilise comme composant (a3) au moins en partie seulement des monomères ou des mélanges de monomères qui, dans le cas de la polymérisation seule du monomère respectif, donnent une résine polyacrylate et/ou polyméthacrylate ayant une température de transition vitreuse de -20°C à +6°C ou de +50°C à 80°C.

3. Composition de revêtement selon la revendication 1 ou 2, **caractérisée en ce que** le composant (a2) est choisi de manière que dans le cas de la polymérisation seule du composant (a2), on obtienne une résine polyacrylate et/ou polyméthacrylate ayant une température de transition de -70°C à +120°C.

4. Composition de revêtement selon l'une quelconque des revendications 1 à 3, **caractérisée en ce que** le composant (a2) est choisi parmi le méthacrylate de n-butyle, l'acrylate de n-butyle, le méthacrylate de tert-butyle, l'acrylate de tert-butyle, le méthacrylate d'isobutyle, l'acrylate d'isobutyle, le méthacrylate de méthyle, l'acrylate de méthyle, le méthacrylate de 2-éthylhexyle, l'acrylate de 2-éthylhexyle, le méthacrylate de lauryle, l'acrylate de lauryle, le méthacrylate de stéaryle, l'acrylate de stéaryle, le méthacrylate d'éthyltriglycol, le méthacrylate de furfuryle et l'acrylate de furfuryle.

5. Composition de revêtement selon l'une quelconque des revendications 1 à 4, **caractérisée en ce que** le composant (a1) est choisi parmi l'acrylate de cyclohexyle, le méthacrylate d'isobornyle, l'acrylate d'isobornyle, l'acrylate de 4-tert-butylcyclohexyle et/ou le méthacrylate de 4-butylcyclohexyle, et est de préférence choisi parmi l'acrylate de 4-butylcyclohexyle et/ou le méthacrylate de 4-butylcyclohexyle.

6. Composition de revêtement selon l'une quelconque des revendications 1 à 5, **caractérisée en ce que** la résine acrylate peut être obtenue à partir de

(a1) de 5 à 80% en poids, de préférence de 5 à 30% en poids, du composant (a1),
(a2) de 5 à 80% en poids, de préférence de 5 à 30% en poids, du composant (a2),
(a3) de 10 à 60% en poids, de préférence de 10 à 40% en poids, du composant (a3),
(a4) de 0 à 20% en poids, de préférence de 0 à 15% en poids, du composant (a4),
(a5) de 1 à 15% en poids, de préférence de 2 à 8% en poids, du composant (a5) et
(a6) de 0 à 40% en poids, de préférence de 0 à 30% en poids, du composant (a6),

la somme des parties en poids des composants (a1) à (a6) étant dans chaque cas 100% en poids.

7. Composition de revêtement selon l'une quelconque des revendications 1 à 6, **caractérisée en ce que** la résine polyacrylate présente une masse moléculaire moyenne en nombre Mn de 1 000 à 7 000, de préférence de 1 800 à 5 000, un rapport de la masse moléculaire moyenne en poids $M_w$ à la masse moléculaire moyenne en nombre $M_n$ de moins de 5,0, de préférence de 1,8 à 4,0, et/ou un indice de groupes OH de 60 à 140 mg de KOH/g et/ou un indice d'acide de 25 à 50 mg de KOH/g.

8. Composition de revêtement selon l'une quelconque des revendications 1 à 7, **caractérisée en ce que** la composition de revêtement contient comme agent de réticulation (B) au moins un di- et/ou polyisocyanate, de préférence au moins un di- et/ou polyisocyanate contenant des groupes isocyanurate.

9. Composition de revêtement selon l'une quelconque des revendications 1 à 8, **caractérisée en ce qu'**elle contient au moins un autre liant différent de la résine polyacrylate (A), de préférence au moins une autre résine polyacrylate différente de (A), et/ou une résine polyuréthanne et/ou une résine polyester et/ou une résine alkyde et/ou un ester de résine époxy, diluable à l'eau ou soluble dans l'eau.

10. Procédé pour la production d'un revêtement multicouche protecteur et/ou décoratif sur la surface d'un subjectile, dans lequel

(1) on applique à la surface du subjectile une peinture de base pigmentée,
(2) un feuil de polymère est formé à partir de la peinture de base appliquée dans l'étape (1),
(3) on applique sur la couche de base ainsi obtenue un vernis transparent de finition qui contient

(A) une résine polyacrylate diluable à l'eau, contenant des groupes hydroxy, et
(B) un composant polyisocyanate en tant qu'agent de réticulation,

et ensuite
(4) la couche de peinture de base et la couche de vernis de finition sont durcies ensemble,

**caractérisé en ce qu'**on utilise comme vernis de finition une composition de revêtement selon l'une quelconque des revendications 1 à 9.

11. Utilisation des compositions de revêtement selon l'une quelconque des revendications 1 à 9, dans le domaine de la peinture de réparation d'automobiles, en particulier comme vernis de finition.